(19)

**Europäisches Patentamt**

**European Patent Office**

**Office européen des brevets**

(11)     **EP 4 570 778 B1**

(12)     **EUROPEAN PATENT SPECIFICATION**

(45) Date of publication and mention
of the grant of the patent:
**20.05.2026  Bulletin 2026/21**

(21) Application number: **25173574.2**

(22) Date of filing: **30.08.2019**

(51) International Patent Classification (IPC):
*C04B 38/00* (2006.01)     *C04B 41/45* (2006.01)
*C04B 26/00* (2006.01)     *C04B 35/195* (2006.01)
*B05B 1/00* (2006.01)

(52) Cooperative Patent Classification (CPC):
(C-Sets available)
**C04B 38/0006; C04B 35/195; C04B 38/0096;**
C04B 2111/00793; C04B 2111/0081     (Cont.)

(54) **METHODS OF MAKING HONEYCOMB BODIES HAVING INORGANIC FILTRATION DEPOSITS**

VERFAHREN ZUR HERSTELLUNG VON WABENKÖRPERN MIT ANORGANISCHEN
FILTRATIONSABSCHEIDUNGEN

PROCÉDÉS DE FABRICATION DE CORPS EN NID D'ABEILLES AYANT DES DÉPÔTS DE
FILTRATION INORGANIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2018   US 201862726192 P**
**03.09.2018   PCT/CN2018/103807**

(43) Date of publication of application:
**18.06.2025   Bulletin 2025/25**

(60) Divisional application:
**26172350.6**

(62) Document number(s) of the earlier application(s) in
accordance with Art. 76 EPC:
**19769656.0 / 3 844 127**

(73) Proprietor: **Corning Incorporated**
**Corning, New York 14831 (US)**

(72) Inventors:
• **Citriniti, Joseph Henry**
**Corning, 14830 (US)**
• **Kerr, Christopher Lane**
**Pennsylvania, 16946 (US)**

• **Kramel, Stefan**
**Ithaca, 14850 (US)**
• **Liu, Cai**
**Suzhou, 215011 (CN)**
• **Mudiraj, Shyam Prasad**
**Painted Post, 14870 (US)**
• **Powers, Dale Robert**
**Painted Post, 14870 (US)**
• **Shultz, Michael George**
**Lowman, 14861 (US)**
• **Steadman, Jason Daniel**
**Rochester, 14620 (US)**
• **Wu, Huiqing**
**Shanghai (CN)**
• **Xing, Xinfeng**
**Shanghai, 201315 (CN)**

(74) Representative: **Elkington and Fife LLP**
**Prospect House**
**8 Pembroke Road**
**Sevenoaks, Kent TN13 1XR (GB)**

(56) References cited:
EP-A1- 1 775 021     EP-A1- 1 775 022
EP-A1- 2 158 956     US-A1- 2010 126 133
US-A1- 2014 272 276

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)

C-Sets
**C04B 38/0006, C04B 35/00, C04B 41/4539,
C04B 41/457;
C04B 38/0096, C04B 38/0006**

**Description**

**BACKGROUND**

Field

The present specification relates to methods of making porous bodies, such as porous ceramic honeycomb bodies, which comprise inorganic deposits, the deposits comprised of an inorganic filtration material.

Technical Background

Wall flow filters are employed to remove particulates from fluid exhaust streams, such as from combustion engine exhaust. Examples include diesel particulate filters used to remove particulates from diesel engine exhaust gases and gasoline particulate filters (GPF) used to remove particulates from gasoline engine exhaust gases. Exhaust gas to be filtered enters inlet cells and passes through the cell walls to exit the filter via outlet channels, with the particulates being trapped on or within the inlet cell walls as the gas traverses and then exits the filter. EP2158956A1 discloses a honeycomb filter including partition walls having a porous partition wall base material and surface layer. EP1775021A1 and EP1775022A1 describe a process of producing a porous catalyst filter comprising depositing a porous catalytic coating on a porous filter support. US2010126133A1 discloses a particulate filter having a filter body with at least one porous wall, and a porous coating on the wall. US20142276A1 describes a method and apparatus to treat a dried unfired article comprising a ceramic precursor composition substantially held together by a binder.

**SUMMARY**

Aspects of the disclosure pertain to porous bodies and methods for their manufacture and use.

In one aspect, a method is disclosed herein according to claim 1.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

**BRIEF DESCRIPTION OF THE DRAWINGS**

FIG. 1 is a flowchart depicting an exemplary embodiment of a process of making material which may be deposited onto porous body thereby creating inorganic material deposits, which are preferably porous deposits, and which can be in the form of discrete regions of filtration material, or which in some portions or some embodiments may be in the form of a porous inorganic layer according to embodiments disclosed herein;

FIG. 2 schematically depicts an apparatus for depositing inorganic material according to embodiments disclosed herein;

FIG. 3 schematically depicts an apparatus for depositing inorganic material according to embodiments disclosed herein;

FIG. 4 schematically depicts an apparatus for depositing inorganic material according to embodiments disclosed herein;

FIG. 5 schematically depicts an apparatus for depositing inorganic material according to embodiments disclosed herein;

FIG. 6 schematically depicts an apparatus for depositing inorganic material according to embodiments disclosed herein;

FIG. 7 schematically depicts an unplugged honeycomb body;

FIG. 8 schematically depicts a wall-flow particulate filter according to embodiments disclosed and described herein;

FIG. 9 is a cross-sectional longitudinal view of the particulate filter shown in FIG. 8;

FIG. 10 schematically depicts a wall of a honeycomb body with particulate loading;

FIG. 11 schematically depicts a portion of an apparatus for depositing an inorganic material according to embodiments disclosed and described herein;

FIGS. 12A-12D schematically depict positioning of the deposition zone during part-switching;

FIG. 13A schematically depicts an apparatus including a T-style chamber according to embodiments disclosed and described herein, and FIG. 13B shows the cross-section along line S-S;

FIG. 14A schematically depicts an apparatus including a co-flow, round chamber according to embodiments disclosed and described herein, and FIG. 14B shows the cross-section along line R-R;

FIG. 15 is a graph of raw material utilization (%) versus carrier gas flow rates ($Nm^3/h$) at varying flow rates for two types of chamber styles; and

FIG. 16 shows graphs of various nozzles versus span and D50 ($\mu$m) for flow control and for pressure control.

## DETAILED DESCRIPTION

Reference will now be made in detail to embodiments of methods for forming honeycomb bodies comprising a porous honeycomb body comprising inorganic deposits (or "filtration deposits") on, or in, or both on and in, the porous ceramic walls of the honeycomb body matrix, embodiments of which are illustrated in the accompanying drawings. Filtration deposits comprise material that was deposited into the honeycomb body, as well as compounds that may be formed, for example by heating, from one or materials that were originally deposited. For example, a binder material may be transformed by heating into an organic component which is eventually burned off or volatilized, while an inorganic component (such as silica) remains contained within the honeycomb filter body. Whenever possible, the same reference numerals will be used throughout the drawings to refer to the same or like parts.

### Definitions

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

As used herein, "have", "having", "include", "including", "comprise", "comprising" or the like are used in their open ended sense, and generally mean "including, but not limited to".

A "honeycomb body," as referred to herein, comprises a ceramic honeycomb structure of a matrix of intersecting walls that form cells which define channels. The ceramic honeycomb structure can be formed, extruded, or molded from a plasiticized ceramic or ceramic-forming batch mixture or paste. A honeycomb body may comprise an outer peripheral wall, or skin, which was either extruded along with the matrix of walls or applied after the extrusion of the matrix. For example, a honeycomb body can be a plugged ceramic honeycomb structure which forms a filter body comprised of cordierite or other suitable ceramic material. A plugged honeycomb body has one or more channels plugged at one, or both ends of the body.

A honeycomb body disclosed herein comprises a ceramic honeycomb structure comprising at least one wall carrying one or more filtration material deposits which is configured to filter particulate matter from a gas stream. The filtration material deposits can be in discrete regions or in some portions or some embodiments can make one or more layers of filtration material at a given location on the wall of the honeycomb body. The filtration material deposits preferably comprise inorganic material, in some embodiments organic material, and in some embodiments both inorganic material and organic material. For example, a honeycomb body may, in one or more embodiments, be formed from cordierite or other porous ceramic material and further comprise inorganic material deposits disposed on or below wall surfaces of the cordierite honeycomb structure.

In some embodiments, the filtration material comprises one or more inorganic materials, such as one or more ceramic or refractory materials.

As used herein, "green" or "green ceramic" are used interchangeably and refer to an unsintered or unfired material, unless otherwise specified.

## Methods

Aspects of the disclosure pertain to methods of forming porous bodies, such as porous ceramic honeycomb bodies, comprising a material such as a filtration material such as a inorganic material such as a ceramic or refractory material or even a porous ceramic or refractory material. The filtration material is an aerosol-deposited filtration material. The filtration material comprises a plurality of inorganic particle agglomerates, wherein the agglomerates are comprised of inorganic, such as ceramic or refractory, material. In some embodiments, the agglomerates are porous, which may allow gas to flow through the agglomerates.

Aerosol deposition enables deposition of filtration material onto the porous ceramic walls, which can be discrete regions as small as a single agglomerate or larger such as a plurality of agglomerates, and in some embodiments is in the form of a porous layer of filtration material, on or in, or both on and in, at least some surfaces of the walls of the ceramic honeycomb body. In certain embodiments, an advantage of the aerosol deposition method according to one or more embodiments is that ceramic honeycomb bodies with enhanced filtration performance can be produced economically, and/or more efficiently.

An aerosol deposition process disclosed herein comprises: mixture preparation (e.g., inorganic material, liquid vehicle, and binder), atomizing the mixture with an atomizing gas with a nozzle to form agglomerates, or aggregates, comprised of the inorganic material, the liquid vehicle, and the binder if any, drying the agglomerates or aggregates in the presence of a carrier gas or a gaseous carrier stream, depositing the aggregates or agglomerates onto the honeycomb bodies, and optionally curing the material. In some embodiments, walls of the apparatus can be heated to assist in drying the aggregates or agglomerates.

In various embodiments, the carrier gas can be heated in addition to, or rather than, heating walls of the apparatus, such that liquid vehicle can evaporate from the agglomerates faster, which in turn allows agglomerates to be generated more efficiently. A heated gaseous carrier stream carries both the atomized droplets and the agglomerates created through the apparatus and into the honeycomb body. In some embodiments, atomizing gas is heated, alone or in combination with heating the carrier gas. In some embodiments, co-flowing the aerosolized droplets and/or agglomerates and the gaseous carrier stream in substantially the same direction into a chamber of an apparatus may help to reduce material loss or overspray on walls of the apparatus. Furthermore, a convergent section can be added to the apparatus before the agglomerates enter the ceramic honeycomb body in order to help the gas flow and particle tracking to be more uniform across the apparatus. An inner diameter of the end of the convergent section can be slightly larger than an outer diameter of the ceramic honeycomb body outer diameter in order to reduce or eliminate boundary effects of non-uniform particle deposition.

In an atomizing nozzle, or atomizer, high pressure and/or high speed atomizing gas can be used to break-up the suspension, which contains a mixture of liquid vehicle, binder, and solid particles, into small liquid droplets, for example with average droplet size of 4-6 micrometers. Heating of these liquid droplets and quick evaporation of the liquid vehicle creates porous inorganic agglomerates before depositing on the honeycomb body walls as a porous inorganic feature or structure. In some embodiments more than one nozzle is utilized, even in some cases under the same operating conditions, such that the liquid flow through each nozzle is reduced and droplet sizes can be smaller.

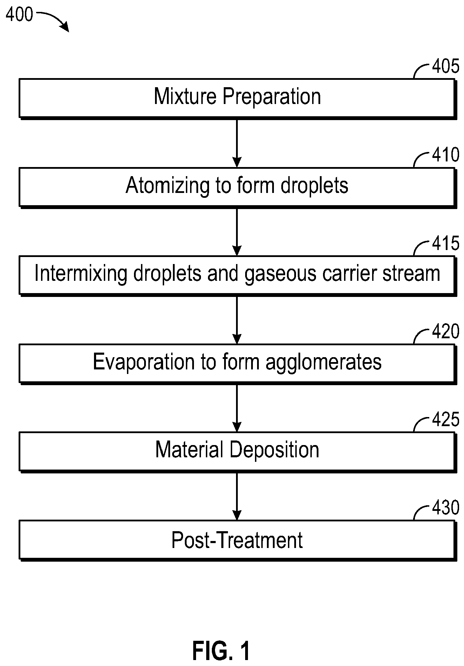

According to one or more embodiments, a process is disclosed herein comprising forming an aerosol with a binder, which is deposited on a honeycomb body to provide a high filtration efficiency material, which may be present in discrete regions and/or in some portions or some embodiments in an inorganic layer, on the honeycomb body to provide a particulate filter. According to one or more embodiments, the performance is >90% filtration efficiency with a <10% pressure drop penalty compared to the bare filter. According to one or more embodiments, as shown in FIG. 1, the process 400 comprises the steps of mixture preparation 405, atomizing to form droplets 410, intermixing droplets and a gaseous carrier stream 415; evaporating liquid vehicle to form agglomerates 420, depositing of material, e.g., agglomerates, on the walls of a wall flow filter 425, and optional post-treatment 430 to, for example, bind the material on, or in, or both on and in, the porous walls of the honeycomb body. Aerosol deposition methods form of agglomerates comprising a binder can provide a high mechanical integrity even without any high temperature curing steps (e.g., heating to temperatures in excess of 1000°C), and in some embodiments even higher mechanical integrity after a curing step such as a high temperature (e.g., heating to temperatures in excess of 1000°C) curing step.

In various embodiments, the process further includes part-switching such that depositing of agglomerates onto the porous walls of a plugged honeycomb body is conducted semi-continuously or continuously, which reduces idle time of the equipment. In one or more embodiments, the part-switching is timed so that deposition is essentially continuous into and/or onto a plurality of ceramic honeycomb bodies. Reference to continuous means that the operating equipment is maintained under operating temperatures and pressures and raw material supply flow, and that the flow of the gaseous carrier stream and agglomerates into a part such as a wall-flow filter is interrupted only to switch out a loaded part for an unloaded part. Semi-continuous allows also for minor interruptions to the raw material supply flow and adjustments to operating temperatures and pressures. In one or more embodiments, semi-continuous flow means that flow is interrupted for greater than or equal to 0.1% to less than or equal to 5% of an operating duration, including greater than or equal to 0.5%, greater than or equal to 1%, greater than or equal to 1.5%, greater than or equal to 2%, greater than or equal to 2.5%, and/or less than or equal to 4.5%, less than or equal to 4%, less than or equal to 3.5%, less than or equal to 3%. In one or more embodiments, flow is continuous for greater than or equal to 95% to less than or equal to 100% of an operating duration, including greater than or equal to 96%, greater than or equal to 97%, greater than or equal to 98%, greater than or equal to 99%, greater than or equal to 99.5%, and/or less than or equal to 99.9%, less than or equal to 99%, less than or equal to 98%, less than or equal to 97%.

**Mixture preparation 405.** Commercially available inorganic particles can be used as a raw material in a mixture in the formation of an inorganic material for depositing. According to one or more embodiments, the particles are selected from $Al_2O_3$, $SiO_2$, $TiO_2$, $CeO_2$, $ZrO_2$, SiC, MgO and combinations thereof. In one or more embodiments, the mixture is a suspension. The particles may be supplied as a raw material suspended in a liquid vehicle to which a further liquid vehicle is optionally added.

In some embodiments, the liquid vehicle is an alcohol (e.g. ethanol). In other embodiments, the liquid is water. Thus in some embodiments the mixture is aqueous-based; for example, a liquid vehicle of the suspension may be water. In other embodiments, the mixture is organic-based; for example, a liquid vehicle of the mixture may be an alcohol, such as ethanol or methanol or combinations thereof. In one or more embodiments, the liquid vehicle has a vapor pressure that is greater than the vapor pressure of water at the temperature of the gaseous carrier stream. In one or more embodiments, the liquid vehicle consists essentially of a material having a boiling point below the boiling point of water at the temperature of the gaseous carrier stream. In one or more embodiments, the liquid vehicle is an alcohol. In one or more embodiments, the liquid vehicle is methoxyethanol, ethanol, xylene, methanol, ethylacetate, benzene, or mixtures thereof. In one or more embodiments, the liquid vehicle is alcohol. In one or more embodiments, the liquid vehicle consists essentially of water.

In some embodiments, the suspension comprises by weight: 5-20% particles and 80-95% liquid, and all values and subranges therebetween. In an embodiment, the suspension comprises by weight: 11 percent $\pm 1\%$ alumina and 89 percent $\pm 1\%$ ethanol.

In one or more embodiments, the particles have an average primary particle size in a range of from about 10 nm to about 4 microns, about 20 nm to about 3 microns or from about 50 nm to about 2 microns, or from about 50 nm to about 900 nm or from about 50 nm to about 600 nm. In specific embodiments, the average primary particle size is in a range of from about 100 nm to about 200 nm, for example, 150 nm. The average primary particle size can be determined as a calculated value from the BET surface area of the aerosol particles, which in some embodiments is 10 $m^2/g$ currently.

In one or more embodiments, the primary particles comprise a ceramic particle, such as an oxide particle, for example $Al_2O_3$, $SiO_2$, MgO, $CeO_2$, $ZrO_2$, CaO, $TiO_2$, cordierite, mullite, SiC, aluminum titanate, and mixture thereof.

The mixture is formed using a solvent which is added to dilute the suspension if needed. Decreasing the solids content in the mixture could reduce the aggregate size proportionally if the droplet generated by atomizing has similar size. The solvent should be miscible with suspension mentioned above, and be a solvent for binder and other ingredients.

Binder is added to reinforce the agglomerates and to preferably provide a stickiness or tackiness, and can comprise inorganic binder, to provide mechanical integrity to deposited material. The binder can provide binding strength between particles at elevated temperature (>500°C). The starting material can be organic. After exposure to high temperature in excess of about 150°C, the organic starting material will decompose or react with moisture and oxygen in the air, and the final deposited material composition could comprise $Al_2O_3$, $SiO_2$, MgO, $CeO_2$, $ZrO_2$, CaO, $TiO_2$, cordierite, mullite, SiC, aluminum titanate, and mixture thereof. One example of a suitable binder is Dowsil™ US-CF-2405 and Dowsil ™ US-CF-2403, both available from The Dow Chemical Company. An exemplary binder content is in the range of greater than or equal to 5% by weight to less than of equal to 25% by weight of the particle content. In an embodiment, the binder content is 15 to 20% by weight $\pm 1\%$.

Catalyst can be added to accelerate the cure reaction of binder. An exemplary catalyst used to accelerate the cure reaction of Dowsil™ US-CF-2405 is titanium butoxide. An exemplary catalyst content is 1% by weight of the binder.

Stirring of the mixture or suspension during storage and/or awaiting delivery to the nozzle may be conducted by using desired stirring techniques. In one or more embodiments, stirring is conducted by a mechanical stirrer. In an embodiment, the use of a mechanical stirrer facilitates reduction and/or elimination of potential contaminations from plastic-coated mixing rods, which are in contact with a holding vessel, used in magnetic stirring systems.

**Atomizing to form droplets 410.** The mixture is atomized into fine droplets by high pressure gas through a nozzle. One example of the nozzle is 1/4J-SS+SU11-SS from Spraying Systems Co. This setup is comprised of a nozzle body along with fluid cap 2050 and air cap 67147. The atomizing gas can contribute to breaking up the liquid-particulate-binder stream into the droplets.

In one or more embodiments, the nozzle herein is a nozzle that utilizes internal mixing, for example, internal mixing nozzles the part numbers are given above. In one or more embodiments, the nozzle herein is a nozzle that utilizes external mixing, for example, Spraying Systems external mix nozzle setup: 1/4J-SS+SU1A which is made up of a 64 aircap and a 1650 fluid cap. Another useful setup consists of a 64 aircap and a 1250 fluid cap. External mix nozzles can be advantageous to allow for smaller particle sizes with tighter particle size distribution which improves material utilization and filtration efficiency. External mix nozzles tend to clog less often as compared to internal mix nozzles. In one or more embodiments, the nozzles herein are converging nozzles. As used herein, converging nozzles refer to nozzles having fluid flow passages whose cross-sectional areas decrease from inlet to outlet thereby accelerating flow of the fluids. Converging nozzles may be internally mixed or externally mixed.

In one or more embodiments, the liquid-particulate-binder droplets are directed into the chamber by a nozzle.

In one or more embodiments, the liquid-particulate-binder droplets are directed into the chamber by a plurality of nozzles. In one or more embodiments, atomizing the plurality of liquid-particulate-binder streams occurs with a plurality of atomizing nozzles. The plurality of nozzles may include 2 or more nozzles, 3 or more, 4 or more, 5 or more, 6 or more, 7 or more, 8 or more, 9 or more, 10 or more, and the like. The plurality of nozzles may be evenly spaced within the chamber. In one or more embodiments, each of the plurality of nozzles is angled toward a center of the apparatus. The angle of the nozzles may be acute, ranging from less than 90° to greater than 10° relative to a side wall of the apparatus, and all values and subranges therebetween, including 20° to 45°.

The pressure of the atomizing gas may be in the range of 20 psi to 150 psi. The pressure of the liquid may be in the range of 1 to 100 psi. The average droplet size according to one or more embodiments may be in the range of from 1 micron to 40 microns, including for example, in a range of greater than or equal to 1 micron to less than or equal to 15 microns; greater than or equal to 2 microns to less than or equal to 8 microns; greater than or equal to 4 microns to less than or equal to 8 microns; and greater than or equal to 4 microns to less than or equal to 6 microns; and all values and subranges therebetween. The droplet size can be adjusted by adjusting the surface tension of the mixture, viscosity of the mixture, density of the mixture, gas flow rate, gas pressure, liquid flow rate, liquid pressure, and nozzle design. In one or more embodiments, the atomizing gas comprises nitrogen. In one or more embodiments, the atomizing gas may consist essentially of an inert gas. In one or more embodiments, the atomizing gas may is predominantly one or more inert gases. In one or more embodiments, the atomizing gas may is predominantly nitrogen gas. In one or more embodiments, the atomizing gas may is predominantly air. In one or more embodiments, the atomizing gas may consist essentially of nitrogen or air. In one or more embodiments, the atomizing gas may be dry. In one or more embodiments, the atomizing gas may comprise essentially no liquid vehicle upon entry to the chamber.

In some embodiments, the suspension flow rate is in the range of 10 to 25 g/minute, including all values and subranges therebetween, including 18 g/min.

In some embodiments, the atomizing gas flow rate nitrogen flow rate is in the range of 2 to 10 Nm$^3$/hr, including all values and subranges therebetween, including 5-6 Nm$^3$/hr.

Suspension flow and corresponding agglomerate size may be controlled by a pressure control system or a flow control system, as appropriate to the apparatus. For a pressure control system, a pressure controller is in communication with a delivery conduit such as tubing or piping and a suspension of primary particles in a liquid is introduced into the delivery conduit, which is then flowed to the nozzle. For a flow control system, an injector pump is provided, which delivers the suspension of primary particles in a liquid to the nozzle. Atomizing gas is typically separately supplied to the nozzle. In a preferred embodiment, a pump directs the liquid-particulate-binder mixture to the atomizing nozzle at a substantially constant flow rate. A constant flow rate can be advantageous as opposed to maintaining a constant pressure because the constant flow rate can help reduce variability in the particle sizes which, in turn, improves material utilization.

The suspension comprises an inorganic material, a liquid vehicle, and a binder, which is supplied to the nozzle as a liquid-particulate-binder stream. That is, particles of an inorganic material can be mixed with a liquid vehicle and a binder material to form a liquid-particulate-binder stream. The liquid-particulate-binder stream is atomized with the atomizing gas into liquid-particulate-binder droplets by the nozzle. In one or more embodiments, the liquid-particulate-binder stream is mixed with the atomizing gas. The liquid-particulate-binder stream is directed into the atomizing nozzle thereby atomizing the particles into liquid-particulate-binder droplets. The liquid-particulate-binder droplets are comprised of the liquid vehicle, the binder material, and the particles.

In one or more embodiments, the liquid-particulate-binder stream mixes with the atomizing gas via the atomizing nozzle. The liquid-particulate-binder stream enters the atomizing nozzle. In one or more embodiments, the mixing of the liquid-particulate-binder stream with the atomizing gas occurs inside the atomizing nozzle. In one or more embodiments, the mixing of the liquid-particulate-binder stream with the atomizing gas occurs outside the atomizing nozzle.

**Intermixing droplets and gaseous carrier stream 415.** The droplets are conveyed toward the honeycomb body by a gaseous carrier stream. The gaseous carrier stream comprises a carrier gas and the atomizing gas. In one or more embodiments, at least a portion of the carrier gas contacts the atomizing nozzle. Substantially all of the liquid vehicle is evaporated from the droplets to form agglomerates comprised of the particles and the binder material.

In one or more embodiments, the gaseous carrier stream is heated prior to being mixed with the droplets. In one or more embodiments, the gaseous carrier stream is at a temperature in the range of from greater than or equal to 50°C to less than or equal to 500°C, including all greater than or equal to 80°C to less than or equal to 300°C, greater than or equal to 50°C to less than or equal to 150°C, and all values and subranges therebetween. Operationally, temperature can be chosen to at least evaporate solvent of the mixture or suspension so long as the final temperature is above the dew point.

As non-limiting example, ethanol can be evaporated at a low temperature. Without being held to theory, it is believed that an advantage of a higher temperature is that the droplets evaporate faster and when the liquid is largely evaporated, they are less likely to stick when they collide. In certain embodiments, smaller agglomerates contribute to better filtration material deposits formation. Furthermore, it is believed that if droplets collide but contain only a small amount of liquid (such as only internally), the droplets may not coalesce to a spherical shape. In some embodiments, non-spherical agglomerates may provide desirable filtration performance.

In one or more embodiments, the atomizing gas is heated to form a heated atomizing gas, which is then flowed through and/or contacted with the nozzle. In one or more embodiments, the heated atomizing gas is at a temperature in the range of from greater than or equal to 50°C to less than or equal to 500°C, including all greater than or equal to 80°C to less than or equal to 300°C, greater than or equal to 50°C to less than or equal to 150°C, and all values and subranges therebetween.

In one or more embodiments, both the carrier gas and the atomizing gas are independently heated and contacted with the nozzle. In one or more embodiments, the gaseous steam is heated, but the atomizing gas and the nozzle are maintained at a low temperature (approximately equal to room temperature, e.g., 25-40°C). In one or more embodiments, the atomizing nozzle is cooled during the atomizing. In one or more embodiments, a temperature of the atomizing nozzle is maintained below a boiling point of the liquid vehicle.

The carrier gas is supplied to the apparatus to facilitate drying and carrying the liquid-particulate-binder droplets and resulting agglomerates through the apparatus and into the honeycomb body. In one or more embodiments, the carrier gas is predominantly an inert gas, such as nitrogen, which is especially advantageous for alcohol-based liquid vehicle and droplets. In one or more embodiments, the carrier gas consists essentially of an inert gas. In one or more embodiments, the carrier gas is predominantly one or more inert gases. In one or more embodiments, the carrier gas is predominantly nitrogen gas. In one or more embodiments, the carrier gas is predominantly air. In one or more embodiments, the carrier gas consists essentially of nitrogen or air. In one or more embodiments, the carrier gas is dry. In one or more embodiments, the carrier gas comprises essentially no liquid vehicle upon entry to the chamber. In one or more embodiments, the carrier gas comprises less than 5 weight percent water vapor. In one or more embodiments, the carrier gas is heated prior to being mixed with the droplets. In one or more embodiments, the carrier gas is at a temperature in the range of from greater than or equal to 50°C to less than or equal to 500°C, including all greater than or equal to 80°C to less than or equal to 300°C, greater than or equal to 50°C to less than or equal to 150°C, and all values and subranges therebetween.

In one or more embodiments, the atomizing gas and the carrier gas are independently delivered to the apparatus at a pressure of greater than or equal to 90 psi, including greater than or equal to 95 psi, greater than or equal to 100 psi, greater than or equal to 105 psi, greater than or equal to 100 psi, greater than or equal to 115 psi, or greater than or equal to 120 psi. In one or more embodiments, a booster provides the atomizing gas and the carrier gas at a desired pressure.

The apparatus can comprise a diffusing area downstream of the nozzle. At least some of the intermixing of the gaseous carrier stream with the liquid-particulate-binder droplets occurs in the diffusing area.

Upon intermixing of the gaseous carrier stream with the liquid-particulate-binder droplets inside the chamber, a gas-liquid-particulate-binder mixture is formed. The gas-liquid-particulate-binder mixture is heated at the intermixing zone. In one or more embodiments, droplets of liquid containing particles and binder are present during the intermixing. In one or more embodiments, the gaseous carrier stream is heated prior to intermixing with the liquid-particulate-binder droplets.

The carrier gas is delivered to a chamber of the duct in an annular flow surrounding the nozzle in a co-flow around the droplets at the end of the nozzle.

**Evaporation to Form Agglomerates 420.** To avoid liquid capillary force impact which may form non-uniform material which may result in high pressure drop penalty, the droplets are dried in an evaporation section of the apparatus, forming dry solid agglomerates, which may be referred to as secondary particles, or "microparticles" which are made up of primary nanoparticles and binder-type material. The liquid vehicle, or solvent, is evaporated and passes through the honeycomb body in a gaseous or vapor phase so that liquid solvent residual or condensation is minimized during material deposition. When the agglomerate is carried into the honeycomb body by gas flow, the residual liquid in the inorganic material should be less than 10 wt%. All liquid is preferably evaporated as a result of the drying and are converted into a gas or vapor phase. The liquid residual could include solvent in the mixture (such as ethanol in the examples), or water condensed from the gas phase. Binder is not considered as liquid residual, even if some or all of the binder may be in liquid or otherwise non-solid state before cure. In one or more embodiments, a total volumetric flow through the chamber is greater than or equal to 5 Nm$^3$/hour and/or less than or equal to 200 Nm$^3$/hour; including greater than or equal to 20 Nm$^3$/hour and/or less than or equal to 100 Nm$^3$/hour; and all values and subranges therebetween. Higher flow rates can deposit more material than lower flow rates. Higher flow rates can be useful as larger cross-sectional area filters are to be produced. Larger cross-sectional area filters may have applications in filter systems for building or outdoor filtration systems.

Substantially all of the liquid vehicle is evaporated from the droplets to form agglomerates of the particles and the binder material, the agglomerates being interspersed in the gaseous carrier stream. In one or more embodiments, the apparatus has an evaporation section having an axial length which is sufficient to allow evaporation of a substantial portion and/or all of the liquid vehicle from the agglomerates.

Regarding flow, in an embodiment, a path of the droplets and a path of the gaseous carrier stream are substantially perpendicular prior to entering the evaporation section. In one or more embodiments, the carrier gas contacts the atomizing nozzle by way of a first path, and wherein a path of the droplets and a second path of the carrier gas are substantially perpendicular to each other prior to entering the evaporation section of the duct.

In another embodiment, a path of the droplets and a path of the gaseous carrier stream are substantially parallel upon entering the evaporation section. In one or more embodiments, a path of the droplets and a path of the gaseous carrier stream are substantially parallel to each other upon entering the evaporation section of the duct. In one or more embodiments, a path of the droplets and a path of the carrier gas are substantially parallel to each other upon entering an evaporation section of the duct.

In an embodiment, the gaseous carrier stream exits the chamber in a direction substantially parallel to gravity. In an embodiment, the gaseous carrier stream exits the chamber in a substantially downward direction. In an embodiment, the gaseous carrier stream exits the chamber in a substantially upward direction.

**Deposition in honeycomb body 425.** The secondary particles or agglomerates of the primary particles are carried in gas flow, and the secondary particles or agglomerates, and/or aggregates thereof, are deposited on inlet wall surfaces of the honeycomb body when the gas passes through the honeycomb body. In one or more embodiments, the agglomerates and/or aggregates thereof are deposited onto the porous walls of the plugged honeycomb body. The deposited agglomerates are disposed on, or in, or both on and in, the porous walls. In one or more embodiments, the plugged honeycomb body comprises inlet channels which are plugged at a distal end of the honeycomb body, and outlet channels which are plugged at a proximal end of the honeycomb body. In one or more embodiments, the agglomerates and/or aggregates thereof are deposited on, or in, or both on and in, the walls defining the inlet channels.

The flow can be driven by a fan, a blower or a vacuum pump. Additional air can be drawn into the system to achieve a desired flow rate. A desired flow rate is in the range of 5 to 200 $m^3$/hr.

One exemplary honeycomb body is suitable for use as a gasoline particular filter (GPF), and has the following non-limiting characteristics: diameter of 4.055 inches (10.3 cm), length of 5.47 inches (13.9 cm), cells per square inch (CPSI) of 200, wall thickness of 8 mils (203 microns), and average pore size of 14$\mu$m.

In one or more embodiments, the average diameter of the secondary particles or agglomerates is in a range of from 300 nm micron to 10 microns, 300 nm to 8 microns, 300 nm micron to 7 microns, 300 nm micron to 6 microns, 300 nm micron to 5 microns, 300 nm micron to 4 microns, or 300 nm micron to 3 microns. In specific embodiments, the average diameter of the secondary particles or agglomerates is in the range of 1.5 microns to 3 microns, including about 2 microns. The average diameter of the secondary particles or agglomerates can be measured by a scanning electron microscope.

In one or more embodiments, the average diameter of the secondary particles or agglomerates is in a range of from 300 nm to 10 microns, 300 nm to 8 microns, 300 nm to 7 microns, 300 nm to 6 microns, 300 nm to 5 microns, 300 nm to 4 microns, or 300 nm to 3 microns, including the range of 1.5 microns to 3 microns, and including about 2 microns, and there is a ratio in the average diameter of the secondary particles or agglomerates to the average diameter of the primary particles of in range of from about 2:1 to about 67:1; about 2:1 to about 9:1; about 2:1 to about 8:1; about 2:1 to about 7:1; about 2:1 to about 6:1; about 2:1 to about 5:1; about 3:1 to about 10:1; about 3:1 to about 9:1; about 3:1 to about 8:1; about 3:1 to about 7:1; about 3:1 to about 6:1; about 3:1 to about 5:1; about 4:1 to about 10:1; about 4:1 to about 9:1; about 4:1 to about 8:1; about 4:1 to about 7:1; about 4:1 to about 6:1; about 4:1 to about 5:1; about 5:1 to about 10:1; about 5:1 to about 9:1; about 5:1 to about 8:1; about 5:1 to about 7:1; or about 5:1 to about 6:1, and including about 10:1 to about 20:1.

In one or more embodiments, the depositing of the agglomerates onto the porous walls further comprises passing the gaseous carrier stream through the porous walls of the honeycomb body, wherein the walls of the honeycomb body filter out at least some of the agglomerates by trapping the filtered agglomerates on or in the walls of the honeycomb body. In one or more embodiments, the depositing of the agglomerates onto the porous walls comprises filtering the agglomerates from the gaseous carrier stream with the porous walls of the plugged honeycomb body.

**Post-Treatment 430.** A post-treatment may optionally be used to adhere the agglomerates to the honeycomb body, and/or to each other. That is, in one or more embodiments, at least some of the agglomerates adhere to the porous walls. In one or more embodiments, the post-treatment comprises heating and/or curing the binder when present according to one or more embodiments. In one or more embodiments, the binder material causes the agglomerates to adhere or stick to the walls of the honeycomb body. In one or more embodiments, the binder material tackifies the agglomerates.

Depending on the binder composition, the curing conditions are varied. According to some embodiments, a low temperature cure reaction is utilized, for example, at a temperature of ≤ 100°C. In some embodiments, the curing can be completed in the vehicle exhaust gas with a temperature ≤ 950° C. A calcination treatment is optional, which can be performed at a temperature ≤650° C. Exemplary curing conditions are: a temperature range of from 40 °C to 200 °C for 10 minutes to 48 hours.

In one or more embodiments, the agglomerates and/or aggregates thereof are heated after being deposited on the honeycomb body. In one or more embodiments, the heating of the agglomerates causes an organic component of the binder material to be removed from the deposited agglomerates. In one or more embodiments, the heating of the agglomerates causes an inorganic component of the binder material to physically bond the agglomerates to the walls of the honeycomb body. In one or more embodiments, the heating of the agglomerates causes an inorganic component of the binder to form a porous inorganic structure on the porous walls of the honeycomb body. In one or more embodiments, the heating of the deposited agglomerates burns off or volatilizes an organic component of the binder material from the deposited agglomerates.

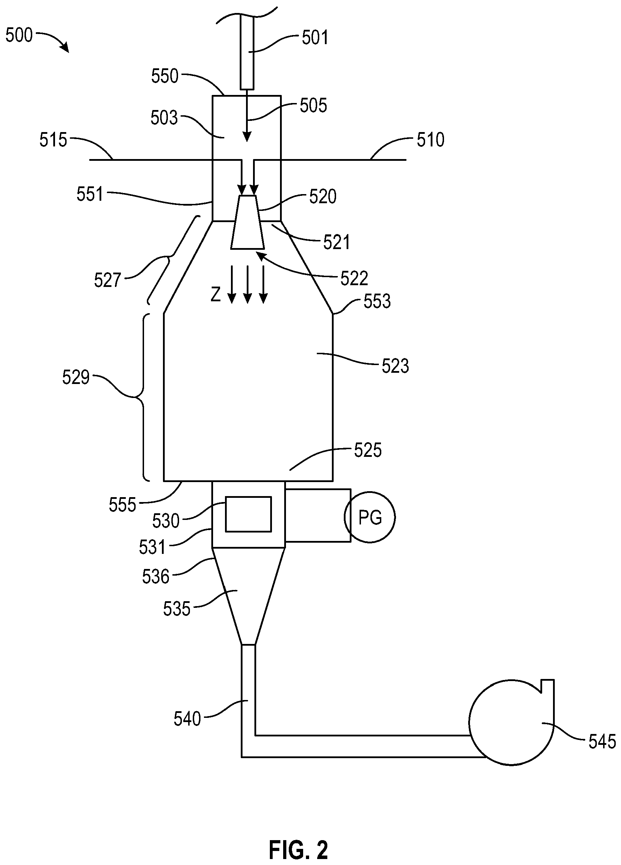

**Apparatus.** Examples of apparatuses that may used for processes to deposit inorganic material with binder on ceramic honeycomb bodies are shown in FIGS. 2-6. Generally, apparatuses suitable for methods herein include a duct that defines a chamber. The duct may have several sections defining differing spaces and chambers. In one or more embodiments, the droplets and the gaseous carrier stream are conveyed through a duct having an outlet end proximate a plugged honeycomb body. The duct may comprise a converging section for engaging a proximal end of the honeycomb body. A converging section is advantageous in that fluid convection flow is enhanced. The duct may be in sealed fluid communication with the plugged honeycomb body during the depositing step. In one or more embodiments, the duct is adiabatic, or essentially adiabatic. In some embodiments, the nozzle temperature is regulated to achieve favorable atomization.

In some embodiments, a round cross-section chamber can facilitate keeping agglomerates entrained in the gaseous carrier stream. In various embodiments, a round cross-sectional duct reduces and/or prevents recirculation regions or "dead-zones" that can be the result of, for example, corners being present.

In one or more embodiments, an average temperature of walls of the duct is less than a temperature of the gaseous carrier stream. In one or more embodiments, an average temperature of walls of the duct is greater than a temperature of the gaseous carrier stream.

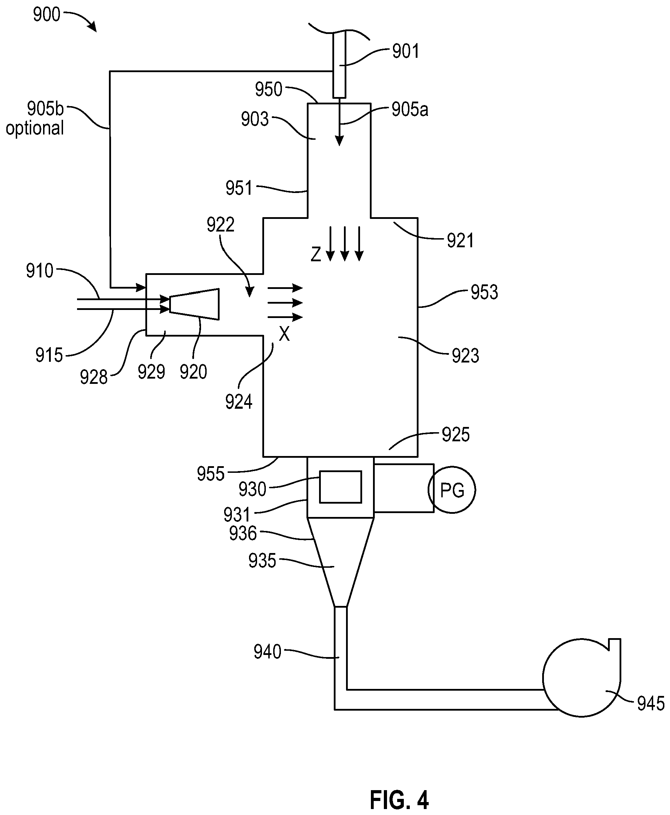

In the following, Apparatuses A-D (FIGS. 2-3 and 5-6) schematically show co-flow where a path of the droplets and a path of the gaseous carrier stream are substantially parallel upon entering the evaporation section. Apparatus "T" (FIG. 4) shows the carrier gas contacting an atomizing nozzle by way of a first path, and wherein a path of the droplets and a second path of the carrier gas are substantially perpendicular to each other prior to entering the evaporation section of the duct.

FIG. 2 shows an apparatus 500, Apparatus "A", for forming honeycomb bodies, the apparatus 500 comprising a duct 551, a deposition zone 531, an exit zone 536, an exit conduit 540, and a flow driver 545.

The duct 551 spans from a first end 550 to a second end 555, defining a chamber of the duct comprising: a plenum space 503 at the first end 550 and an evaporation chamber 523 downstream of the plenum space 503. In one or more embodiments, the duct 551 is essentially adiabatic. That is, the duct 551 may have no external sources of heat. The evaporation chamber 523 is defined by an evaporation section 553 of the duct 551, which in this embodiment; comprises a first section of non-uniform diameter 527 and a second section of substantially uniform diameter 529. The evaporation section 553 comprises an inlet end 521 and an outlet end 525. The first section of non-uniform diameter 527 has a diameter that increases from the inlet end 521 toward the section of uniform diameter 529, which creates a diverging space for the flow to occupy.

A carrier gas is supplied to the duct 551 by a conduit 501, which may have a heat source to create a heated carrier gas 505. An atomizing gas 515 and a mixture 510 are separately supplied by individual delivery conduits such as tubing or piping to a nozzle 520, which is at the inlet end 521 of the evaporation section 553 and is in fluid communication with the duct 551, specifically in this embodiment with the evaporation chamber 523. The mixture 510 is atomized in the nozzle 520 with the atomizing gas 515. In one or more embodiments, the mixture 510 comprises an inorganic material, a liquid vehicle, and a binder, as defined herein, which as supplied to the nozzle is a liquid-particulate-binder stream. The liquid-particulate-binder stream is atomized with the atomizing gas 515 into liquid-particulate-binder droplets by the nozzle 520.

In one or more embodiments, the heated carrier gas 505 flows over the nozzle 520. The atomizing gas 515 can be heated to form a heated atomizing gas. Temperature of the nozzle may be regulated as desired.

Outlet flow from the nozzle 520 and flow of the heated carrier gas 505 are both in a "Z" direction as shown in FIG. 2. There may be a diffusing area 522 downstream of the nozzle where at least some intermixing occurs. In this embodiment, the diffusing area 522 is located in the evaporation chamber 523, but in other embodiments, the diffusing area 522 may be located in the plenum space 503 depending on the location of the nozzle.

The outlet flow of from the nozzle intermixes with the heated carrier gas 505, thereby forming a gas-liquid-particulate-binder mixture, which flows through the chamber of the duct 551. Specifically, the gas-liquid-particulate-binder mixture flows through the evaporation chamber 523 of the evaporation section 553 and into the deposition zone 531 at the outlet end 525 of the evaporation section 553. At the intermixing, the gas-liquid-particulate-binder mixture is heated inside the chamber by the heated carrier gas.

In this embodiment, the outlet flow of the nozzle and the heated carrier gas enter the evaporation chamber 523 of the evaporation section 553 from substantially the same direction. In the evaporation chamber 523, substantially all of the liquid vehicle from the droplets is evaporated thereby forming agglomerates of the particles and the binder material, the agglomerates being interspersed in a gaseous carrier stream, which is comprised of the carrier gas and the atomizing gas.

The deposition zone 531 in fluid communication with the duct 551 houses a plugged ceramic honeycomb body 530, for example, a wall-flow particulate filter. The deposition zone 531 has an inner diameter that is larger than the outer diameter of the ceramic honeycomb body 530. To avoid leakage of the gases carrying the ceramic powders, the ceramic honeycomb body 530 is sealed to the inner diameter of deposition zone 531, a suitable seal is, for example, an inflatable "inner tube". A pressure gauge, labelled as "PG" measures the difference in the pressure upstream and downstream from the particulate filter.

The gas-liquid-particulate-binder mixture flows into the ceramic honeycomb body 530 thereby depositing the inorganic material of the mixture on the ceramic honeycomb body. Specifically, the agglomerates and the gaseous carrier stream pass into the honeycomb body such that the gaseous carrier stream passes through the porous walls of the honeycomb body, and the walls of the honeycomb body trap the agglomerates, wherein the agglomerates and/or aggregates thereof are deposited on or in the walls of the honeycomb body. The inorganic material binds to the ceramic honeycomb body upon post-treatment to the ceramic honeycomb body. In an embodiment, binder material causes the agglomerates to adhere or stick to the walls of the honeycomb body.

Downstream from the ceramic honeycomb body 530 is an exit zone 536 defining an exit chamber 535. The flow driver 545 is downstream from the ceramic honeycomb body 530, in fluid communication with the deposition zone 531 and the exit zone 536 by way of the exit conduit 540. Non-limiting examples of flow drivers are: fan, blower, and vacuum pump. The aerosolized mixture is dried and deposited on one or more walls of the particulate filter as agglomerates of filtration material, which is present as discrete regions of filtration material, or in some portions or some embodiments as a layer, or both, wherein the agglomerates are comprised of primary particles of inorganic material.

Flow through embodiments such as apparatus 500 is considered in a downward direction, for example, substantially parallel to the direction of gravity. In other embodiments, the apparatus is configured such that flow is directed in a substantially upward or vertical direction.

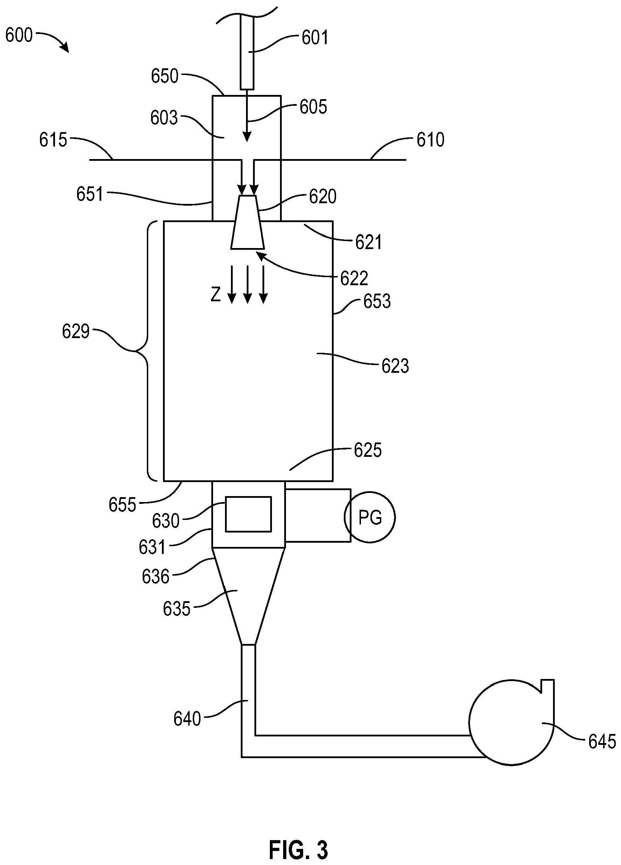

In FIG. 3, an apparatus 600, Apparatus "B", for forming honeycomb bodies is shown comprising a duct 651, a deposition zone 631, an exit zone 636, an exit conduit 640, and a flow driver 645.

The duct 651 spans from a first end 650 to a second end 655, defining a chamber of the duct comprising: a plenum space 603 at the first end 650 and an evaporation chamber 623 downstream of the plenum space 603. In one or more embodiments, the diameter of the duct 651 defining the plenum space 603 can be equal to the diameter of the evaporation section 653 of the duct 651 defining the evaporation chamber 623. In one or more embodiments, the duct 651 is essentially adiabatic. That is, the duct 651 may have no external sources of heat. The evaporation chamber 623, in this embodiment, comprises a single section of substantially uniform diameter 629. The evaporation section 653 comprises an inlet end 621 and an outlet end 625.

A carrier gas is supplied to the duct 651 by a conduit 601, which may have a heat source to create a heated carrier gas 605. An atomizing gas 615 and a mixture 610 are separately supplied by individual delivery conduits such as tubing or piping to a nozzle 620, which is at the inlet end 621 of the evaporation section 653 and is in fluid communication with the duct 651, specifically in this embodiment with the evaporation chamber 623. The mixture 610 is atomized in the nozzle 620 with the atomizing gas 615. In one or more embodiments, the mixture 610 comprises an inorganic material, a liquid vehicle, and a binder, as defined herein, which as supplied to the nozzle is a liquid-particulate-binder stream. The liquid-particulate-binder stream is atomized with the atomizing gas 615 into liquid-particulate-binder droplets by the nozzle 620.

In one or more embodiments, the heated carrier gas 605 flows over the nozzle 620. The atomizing gas 615 can be heated to form a heated atomizing gas. The temperature of the nozzle may be regulated as desired.

Outlet flow from the nozzle 620 and flow of the heated carrier gas 605 are both in a "Z" direction as shown in FIG. 3. Preferably a diffusing area 622 is downstream of the nozzle where at least some intermixing occurs. In this embodiment, the diffusing area 622 is located in the evaporation chamber 623, but in other embodiments the diffusing area may be located in the plenum space 603 depending on the location of the nozzle.

The outlet flow from the nozzle intermixes with the heated carrier gas 605, thereby forming a gas-liquid-particulate-binder mixture, which flows through the chamber of the duct 651. Specifically, the gas-liquid-particulate-binder mixture flows through the evaporation chamber 623 of the evaporation section 653 and into the deposition zone 631 at the outlet end 625 of the evaporation section 653. At the intermixing, the gas-liquid-particulate-binder mixture is heated inside the chamber by the heated carrier gas.

In this embodiment, the outlet flow of the nozzle and the carrier gas enter the evaporation chamber 623 of the evaporation section 653 from substantially the same direction. In the evaporation chamber 623, substantially all of the liquid vehicle from the droplets is evaporated thereby forming agglomerates of the particles and the binder material, the agglomerates being interspersed in a gaseous carrier stream, which is comprised of the carrier gas and the atomizing gas.

The deposition zone 631 in fluid communication with the duct 651 houses a plugged ceramic honeycomb body 630, for example, a wall-flow particulate filter. The deposition zone 631 has an inner diameter that is larger than the outer diameter of the ceramic honeycomb body 630. To avoid leakage of the gases carrying the ceramic powders, the ceramic honeycomb body 630 is sealed to the inner diameter of the deposition zone 631, a suitable seal is, for example, an inflatable "inner tube". A pressure gauge, labelled as "PG" measures the difference in the pressure upstream and downstream from the particulate filter. The gas-liquid-particulate-binder mixture flows into the ceramic honeycomb body 630 thereby depositing the inorganic material of the mixture on the ceramic honeycomb body. Specifically, the agglomerates and the gaseous carrier stream pass into the honeycomb body such that the gaseous carrier stream passes through the porous walls of the honeycomb body, and the walls of the honeycomb body trap the agglomerates, wherein the agglomerates are deposited on or in the walls of the honeycomb body. The inorganic material binds to the ceramic honeycomb body upon post-treatment to the ceramic honeycomb body. In an embodiment, binder material causes the agglomerates to adhere or stick to the walls of the honeycomb body.

Downstream from the ceramic honeycomb body 630 is an exit zone 636 defining an exit chamber 635. The flow driver 645 is downstream from the ceramic honeycomb body 630, in fluid communication with the deposition zone 631 and the exit zone 636 by way of the exit conduit 640. Non-limiting examples of flow drivers are: fan, blower, and vacuum pump. The aerosolized mixture is dried and deposited on one or more walls of the particulate filter as agglomerates of filtration material, which is present as discrete regions of filtration material, or in some portions or some embodiments as a layer, or both, wherein the agglomerates are comprised of primary particles of inorganic material.

Flow through embodiments such as apparatus 600 is considered in a downward direction, for example, substantially parallel to the direction of gravity. In other embodiments, the apparatus is configured such that flow is directed in a substantially upward or vertical direction.

In FIG. 4, an apparatus 900, Apparatus "T", for forming honeycomb bodies is shown comprising a duct 951, a deposition zone 931, an exit zone 936, an exit conduit 940, and a flow driver 945.

The duct 951 spans from a first end 950 to a second end 955 including a right cylindrical section 928, all defining a chamber of the duct comprising: a first plenum space 903 at the first end 950, an evaporation chamber 923 downstream of the plenum space 603, and a second plenum space 929 defined by the right cylindrical section 928. In one or more embodiments, the diameter of the duct 951 defining the plenum space 903 can be equal to the diameter of a first inlet location 921 of an evaporation section 953 of the duct 951. In one or more embodiments, the duct 951 is essentially adiabatic. That is, the duct 951 may have no external sources of heat. The evaporation chamber 923 is defined by the evaporation section 953 of the duct 951. The evaporation section 953 comprises the first inlet location 921 from the first plenum space 903, a second inlet location 924 from the second plenum space 929, and an outlet end 925. In some embodiments, some evaporation may occur in at least a portion of second plenum space 929 defined by the right cylindrical section 928.

A carrier gas is supplied in a first path to the duct 951 by a conduit 901, which may have a heat source to create a primary heated carrier gas 905a that enters the first plenum space 903, and optionally another secondary heated carrier gas 905b that enters the second plenum space 929 by a second path. An atomizing gas 915 and a mixture 910 are separately supplied by individual delivery conduits such as tubing or piping to a nozzle 920, which is in the second plenum space 929 of the right cylindrical section 928 and is in fluid communication with the evaporation chamber 923 of the evaporation section 953. The mixture 910 is atomized in the nozzle 920 with the atomizing gas 915. In one or more embodiments, the mixture 910 comprises an inorganic material, a liquid vehicle, and a binder, as defined herein, which as supplied to the nozzle is a liquid-particulate-binder stream. The liquid-particulate-binder stream is atomized with the atomizing gas 915 into liquid-particulate-binder droplets by the nozzle 920.

In one or more embodiments, the secondary heated carrier gas 905b flows over the nozzle 920 Temperature of the nozzle may be regulated as desired.

Outlet flow from the nozzle 920 and, when present, flow of the secondary heated carrier gas 905b are both is in an "X" direction as shown in FIG. 4. Flow of the primary heated carrier gas 905a is in a "Z" direction as shown in FIG. 4. There may be a diffusing area 922 downstream of the nozzle where at least some intermixing occurs. In this embodiment, the diffusing area 922 is located at least partially in the second plenum space 929, but in other embodiments, the diffusing area 922 may be located in evaporation chamber 923 depending on the location of the nozzle.

The outlet flow of from the nozzle intermixes with the heated carrier gases 905a and 905b, thereby forming a gas-liquid-particulate-binder mixture, which flows through the chamber of the duct 951. Specifically, the gas-liquid-particulate-binder mixture flows through the evaporation chamber 923 of the evaporation section 953 and into the deposition zone 931 at the outlet end 925 of the evaporation section 953. At the intermixing, the gas-liquid-particulate-binder mixture is heated inside the chamber by the heated carrier gas.

In this embodiment, the outlet flow of the nozzle and the primary carrier gas 905a enter the evaporation chamber 923 of the evaporation section 953 from substantially perpendicular directions. In the evaporation chamber 923, substantially all of the liquid vehicle from the droplets is evaporated thereby forming agglomerates of the particles and the binder material, the agglomerates being interspersed in a gaseous carrier stream, which is comprised of the carrier gases and the atomizing gas.

The deposition zone 931 in fluid communication with the duct 951 houses a plugged ceramic honeycomb body 930, for example, a wall-flow particulate filter. The deposition zone 931 has an inner diameter that is larger than the outer diameter of the ceramic honeycomb body 930. To avoid leakage of the gases carrying the ceramic powders, the ceramic honeycomb body 930 is sealed to the inner diameter of the deposition zone 931, a suitable seal is, for example, an inflatable "inner tube". A pressure gauge, labelled as "PG" measures the difference in the pressure upstream and downstream from the particulate filter. The gas-liquid-particulate-binder mixture flows into the ceramic honeycomb body 930 thereby depositing the inorganic material of the mixture on the ceramic honeycomb body. Specifically, the agglomerates and the gaseous carrier stream pass into the honeycomb body such that the gaseous carrier stream passes through the porous walls of the honeycomb body, and the walls of the honeycomb body trap the agglomerates, wherein the agglomerates are deposited on or in the walls of the honeycomb body. The inorganic material binds to the ceramic honeycomb body upon post-treatment to the ceramic honeycomb body. In an embodiment, binder material causes the agglomerates to adhere or stick to the walls of the honeycomb body.

Downstream from the ceramic honeycomb body 930 is an exit zone 936 defining an exit chamber 935. The flow driver 945 is downstream from the ceramic honeycomb body 930, in fluid communication with the deposition zone 931 and the exit zone 936 by way of the exit conduit 940. Non-limiting examples of flow drivers are: fan, blower, and vacuum pump. The aerosolized mixture is dried and deposited on one or more walls of the particulate filter as agglomerates of filtration material, which is present as discrete regions of filtration material, or in some portions or some embodiments as a layer, or both, wherein the agglomerates are comprised of primary particles of inorganic material.

Overall flow through embodiments such as apparatus 900 is considered in a downward direction, for example, substantially parallel to the direction of gravity. In other embodiments, the apparatus is configured such that flow is directed in a substantially upward or vertical direction.

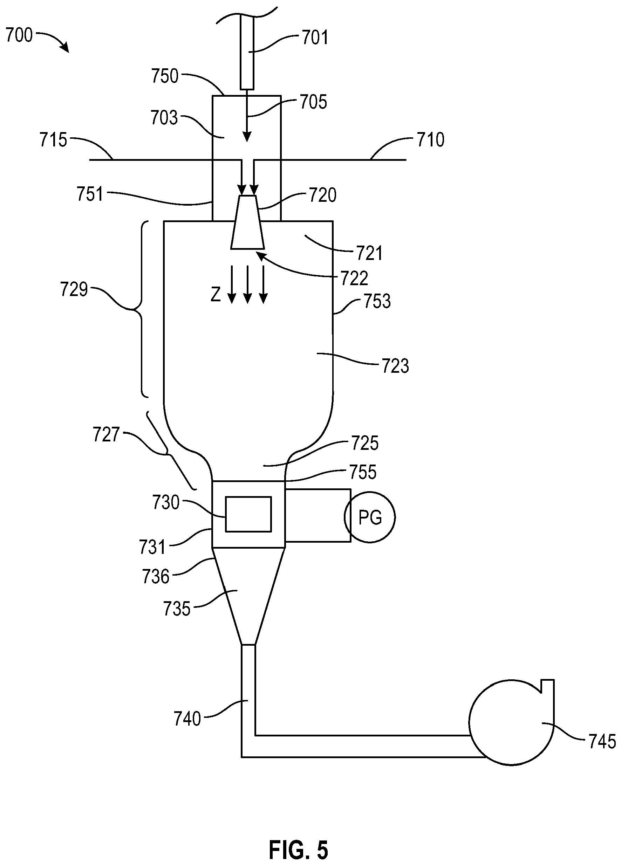

FIG. 5 shows an apparatus 700, Apparatus "C", for forming honeycomb bodies, the apparatus 700 comprising a duct 751, a deposition zone 731, an exit zone 736, an exit conduit 740, and a flow driver 745.

The duct 751 spans from a first end 750 to a second end 755, defining a chamber of the duct comprising: a plenum space 703 at the first end 750 and an evaporation chamber 723 downstream of the plenum space 703. In one or more embodiments, the diameter of the duct 751 defining the plenum space 703 can be equal to the diameter of an evaporation section 753 at an inlet end 721. In one or more embodiments, the duct 751 is essentially adiabatic. That is, the duct 751 may have no external sources of heat. The evaporation chamber 723 is defined by the evaporation section 753 of the duct 751, which in this embodiment, comprises a first section of non-uniform diameter 727 and a second section of substantially uniform diameter 729. The evaporation section 753 comprises the inlet end 721 and an outlet end 725. The first section of non-uniform diameter 727 has a diameter that decreases from the outlet end 725 toward the section of uniform diameter 729, which creates a converging space for the flow as it enters the deposition zone 731.

A carrier gas is supplied to the duct 751 by a conduit 701, which may have a heat source to create a heated carrier gas 705. An atomizing gas 715 and a mixture 710 are separately supplied by individual delivery conduits such as tubing or piping to a nozzle 720, which is at the inlet end 721 of the evaporation section 753 and is in fluid communication with the duct 751, specifically in this embodiment with the evaporation chamber 723. The mixture 710 is atomized in the nozzle 720 with the atomizing gas 715. In one or more embodiments, the mixture 710 comprises an inorganic material, a liquid vehicle, and a binder, as defined herein, which as supplied to the nozzle is a liquid-particulate-binder stream. The liquid-particulate-binder stream is atomized with the atomizing gas 715 into liquid-particulate-binder droplets by the nozzle 720.

In one or more embodiments, the heated carrier gas 705 flows over the nozzle 720. The atomizing gas 715 can be heated to form a heated atomizing gas. Temperature of the nozzle may be regulated as desired.

Outlet flow from the nozzle 720 and flow of the heated carrier gas 705 are both in a "Z" direction as shown in FIG. 5. There may be a diffusing area 722 downstream of the nozzle where at least some intermixing occurs. In this embodiment, the diffusing area 722 is located in the evaporation chamber 723, but in other embodiments, the diffusing area may be located in the plenum space 703 depending on the location of the nozzle.

The outlet flow of from the nozzle intermixes with the heated carrier gas 705, thereby forming a gas-liquid-particulate-binder mixture, which flows through the chamber of the duct 751. Specifically, the gas-liquid-particulate-binder mixture flows through the evaporation chamber 723 of the evaporation section 753 and into the deposition zone 731 at the outlet end 725 of the evaporation section 753. At the intermixing, the gas-liquid-particulate-binder mixture is heated inside the chamber by the heated carrier gas.

In this embodiment, the outlet flow of the nozzle and the heated carrier gas enter the evaporation chamber 723 of the evaporation section 753 from substantially the same direction. In the evaporation chamber 723, substantially all of the liquid vehicle from the droplets is evaporated thereby forming agglomerates of the particles and the binder material, the agglomerates being interspersed in a gaseous carrier stream, which is comprised of the carrier gas and the atomizing gas.

The deposition zone 731 in fluid communication with the duct 751 houses a plugged ceramic honeycomb body 730, for example, a wall-flow particulate filter. The deposition zone 731 has an inner diameter that is larger than the outer diameter of the ceramic honeycomb body 730. To avoid leakage of the gases carrying the ceramic powders, the ceramic honeycomb body 730 is sealed to the inner diameter of the deposition zone 731, a suitable seal is, for example, an inflatable "inner tube". A pressure gauge, labelled as "PG" measures the difference in the pressure upstream and downstream from the particulate filter. The gas-liquid-particulate-binder mixture flows into the ceramic honeycomb body 730 thereby depositing the inorganic material of the mixture on the ceramic honeycomb body. Specifically, the agglomerates and the gaseous carrier stream pass into the honeycomb body such that the gaseous carrier stream passes through the porous walls of the honeycomb body, and the walls of the honeycomb body trap the agglomerates, wherein the agglomerates and/or aggregates thereof are deposited on or in the walls of the honeycomb body. The inorganic material binds to the ceramic honeycomb body upon post-treatment to the ceramic honeycomb body. In an embodiment, binder material causes the agglomerates to adhere or stick to the walls of the honeycomb body.

Downstream from the ceramic honeycomb body 730 is an exit zone 736 defining an exit chamber 735. The flow driver 745 is downstream from the ceramic honeycomb body 730, in fluid communication with the deposition zone 731 and the exit zone 736 by way of the exit conduit 740. Non-limiting examples of flow drivers are: fan, blower, and vacuum pump. The droplets of the atomized mixture are aerosolized and dried and deposited on one or more walls of the particulate filter as agglomerates of filtration material, which is present as discrete regions of filtration material, or in some portions or some embodiments as a layer, or both, wherein the agglomerates are comprised of primary particles of inorganic material.

Flow through embodiments such as apparatus 700 is considered in a downward direction, for example, substantially parallel to the direction of gravity. In other embodiments, the apparatus is configured such that flow is directed in a substantially upward or vertical direction.

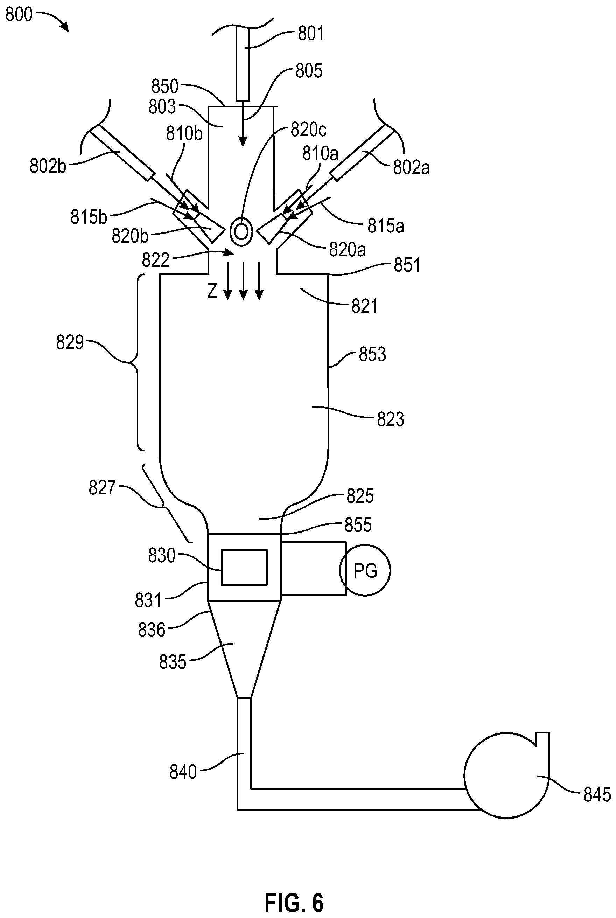

FIG. 6 shows an apparatus 800, Apparatus "D", for forming honeycomb bodies, the apparatus 800 comprising a duct 851, a deposition zone 831, an exit zone 836, an exit conduit 840, and a flow driver 845.

The duct 851 spans from a first end 850 to a second end 855, defining a chamber of the duct comprising: a plenum space 803 at the first end 850 and an evaporation chamber 823 downstream of the plenum space 803. In one or more embodiments, the duct 851 is essentially adiabatic. That is, the duct 851 may have no external sources of heat. The evaporation chamber 823 is defined by an evaporation section 853 of the duct 851, which in this embodiment, comprises a first section of non-uniform diameter 827 and a second section of substantially uniform diameter 829. The evaporation section 853 comprises an inlet end 821 and an outlet end 825. The first section of non-uniform diameter 827 has a diameter that decreases from the outlet end 825 toward the section of uniform diameter 829, which creates a converging space for the flow as it enters the deposition zone 831. In some embodiments, the evaporation section 853 is configured to have a single section of substantially uniform diameter analogous to Apparatus "B". Alternatively, the evaporation section 853 has a section of non-uniform diameter that increases from the inlet end 821 toward a section of uniform diameter analogous to Apparatus "A."

A carrier gas is supplied to the duct 851 by a conduit 801, which may have a heat source to create a heated carrier gas 805. An atomizing gas 815 and a mixture 810 are separately supplied by individual delivery conduits such as tubing or piping to a plurality of nozzles 820a, 820b, and 820c, which are in fluid communication with the plenum space 803. Each nozzle has an inflow of the atomizing gas e.g., 815a supplies the nozzle 820a and 815b supplies the nozzle 820b. Each nozzle has an inflow of the mixture e.g., 810a supplies the nozzle 820a and 810b supplies the nozzle 820b. Optionally, each nozzle has a supply of the heated carrier gas, e.g., 802a supplies the nozzle 820a and 802b supplies the nozzle 820b. While the embodiment of FIG. 6 shows three nozzles, in other embodiments, a plurality of nozzles of any number is be used. The mixture 810 is atomized in the nozzle 820 with the atomizing gas 815. In one or more embodiments, the mixture 810 comprises an inorganic material, a liquid vehicle, and a binder, as defined herein, which as supplied to the nozzle is a liquid-particulate-binder stream. The liquid-particulate-binder stream is atomized with the atomizing gas 815 into liquid-particulate-binder droplets by the nozzle 820.

In one or more embodiments, the heated carrier gas 805 and optionally 802a and 802b flow over the nozzles. The atomizing gas 815a and 815b can be heated to form a heated atomizing gas. Temperatures of the nozzles may be regulated, individually or collectively, as desired.

Flow of the heated carrier gas 805 is in a "Z" direction as shown in FIG. 6. While outlet flow from the nozzles 820a, 820b, and 820c may be angled towards a center of the duct 851, upon intermixing with the heated carrier gas 805, the outlet flow of the nozzles will generally be in the "Z" direction. There may be a diffusing area 822 downstream of the nozzles where at least some intermixing occurs. In this embodiment, the diffusing area 822 is located in the plenum space 803, but in other embodiments, the diffusing area may be located in the evaporation chamber 823 depending on the location of the nozzles.

The outlet flow of from the nozzles intermixes with the heated carrier gas 805, thereby forming a gas-liquid-particulate-binder mixture, which flows through the chamber of the duct 851. Specifically, the gas-liquid-particulate-binder mixture flows through the evaporation chamber 823 of the evaporation section 853 and into the deposition zone 831 at the outlet end 825 of the evaporation section 853. At the intermixing, the gas-liquid-particulate-binder mixture is heated inside the chamber by the heated carrier gas.

In this embodiment, the outlet flow of the nozzles and the heated gas enter the evaporation chamber 823 of the evaporation section 853 from substantially the same direction. In the evaporation chamber 823, substantially all of the liquid vehicle from the droplets is evaporated thereby forming agglomerates of the particles and the binder material, the agglomerates being interspersed in a gaseous carrier stream, which is comprised of the carrier gas and the atomizing gas.

The deposition zone 831 in fluid communication with the duct 851 houses a plugged ceramic honeycomb body 830, for example, a wall-flow particulate filter. The deposition zone 831 has an inner diameter that is larger than the outer diameter of the ceramic honeycomb body 830. To avoid leakage of the gases carrying the ceramic powders, the ceramic honeycomb body 830 is sealed to the inner diameter of deposition zone 831, a suitable seal is, for example, an inflatable "inner tube". A pressure gauge, labelled as "PG" measures the difference in the pressure upstream and downstream from the particulate filter. The gas-liquid-particulate-binder mixture flows into the ceramic honeycomb body 830 thereby depositing the inorganic material of the mixture on the ceramic honeycomb body. Specifically, the agglomerates and the gaseous carrier stream pass into the honeycomb body such that the gaseous carrier stream passes through the porous walls of the honeycomb body, and the walls of the honeycomb body trap the agglomerates, wherein the agglomerates and/or aggregates thereof are deposited on or in the walls of the honeycomb body. The inorganic material binds to the ceramic honeycomb body upon post-treatment to the ceramic honeycomb body. In an embodiment, binder material causes the agglomerates to adhere or stick to the walls of the honeycomb body.

Downstream from the ceramic honeycomb body 830 is an exit zone 836 defining an exit chamber 835. The flow driver 845 is downstream from the ceramic honeycomb body 830, in fluid communication with the deposition zone 831 and the exit zone 836 by way of the exit conduit 840. Non-limiting examples of flow drivers are: fan, blower, and vacuum pump. The droplets of the atomized mixture are aerosolized and dried and deposited on one or more walls of the particulate filter as agglomerates of filtration material, which is present as discrete regions of filtration material, or in some portions or some embodiments as a layer, or both, wherein the agglomerates are comprised of primary particles of inorganic material.

Flow through embodiments such as apparatus 800 is considered in a downward direction, for example, substantially parallel to the direction of gravity. In other embodiments, the apparatus may be configured such that flow is directed in a substantially upward or vertical direction.

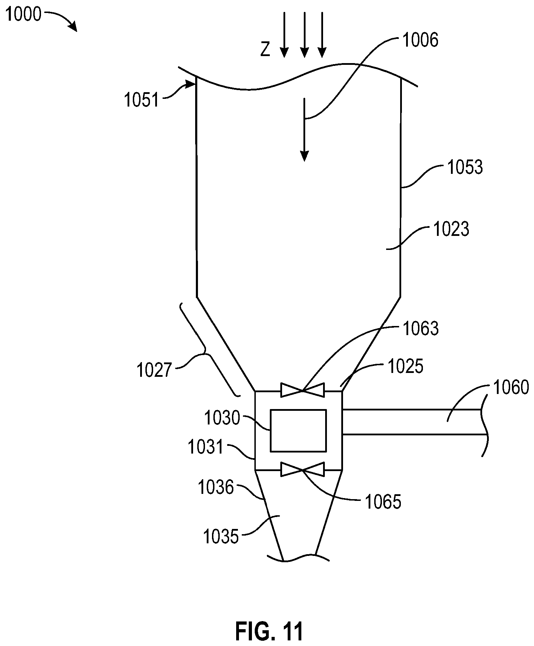

FIG. 11 shows a portion of an exemplary apparatus 1000 for depositing a material to form honeycomb bodies continuously or semi-continuously by part-switching. Advantages of continuous and/or semi-continuous operation include: improving manufacturing readiness; reducing idle time of the equipment (discontinuous operation); and reducing idle time of the process (heat-up/cool-down). For example, start/stop cycles can be minimized and/or eliminated, which reduces downtime while equipment and components reach operating temperatures. Also for example, clogging of nozzles is minimized and/or eliminated in the absence of start/stop cycles for single part operations.

In this embodiment, duct 1051 includes a section of non-uniform diameter 1027 having a diameter that substantially uniformly decreases to an outlet end 1025 and into a deposition zone 1031. In FIG. 11, a gas-liquid-particulate-binder mixture 1006 flows in direction "Z" through an evaporation chamber 1023 and into the deposition zone 1031 at the outlet end 1025 of the evaporation section 1053. In the evaporation chamber 1023, substantially all of the liquid vehicle from the droplets is evaporated thereby forming agglomerates of the particles and the binder material, the agglomerates being interspersed in a gaseous carrier stream, which is comprised of the carrier gas and the atomizing gas as well as a vapor phase of the liquid vehicle. During depositing of the agglomerates (including possible aggregates of agglomerates), the duct 1051 is in sealed fluid communication with the deposition zone 1031, which houses a plugged ceramic honeycomb body 1030, for example, a wall-flow particulate filter. When the duct 1051 is in sealed fluid communication with the deposition zone 1031, valve 1063 is in an open position, and valve 1065 is in an open position to an exit chamber 1035 of an exit zone 1036. After deposition of agglomerates is complete, a filtration deposit, or inorganic deposit, loaded part is formed. During deposition, the deposition zone 1031 and the plugged ceramic honeycomb body 1030 are in a first or loading position in fluid communication with the duct 1051. In one or more embodiments, valves 1063 and 1065 are independently bladder valves.

For part-switching, a first plugged honeycomb body comprising agglomerates, that is a first loaded part, is moved away from the duct to a second or offline position and a second plugged honeycomb body is moved to the first or loading position and engaged in fluid communication with the duct. In an embodiment, during the part-switching, the duct 1051 is unsealed from the deposition zone 1031, the first part loaded with agglomerates as housed in the deposition zone is moved to an offline position away from the duct, and a second plugged honeycomb body, not yet loaded with agglomerates, is engaged in sealed fluid communication with the duct.

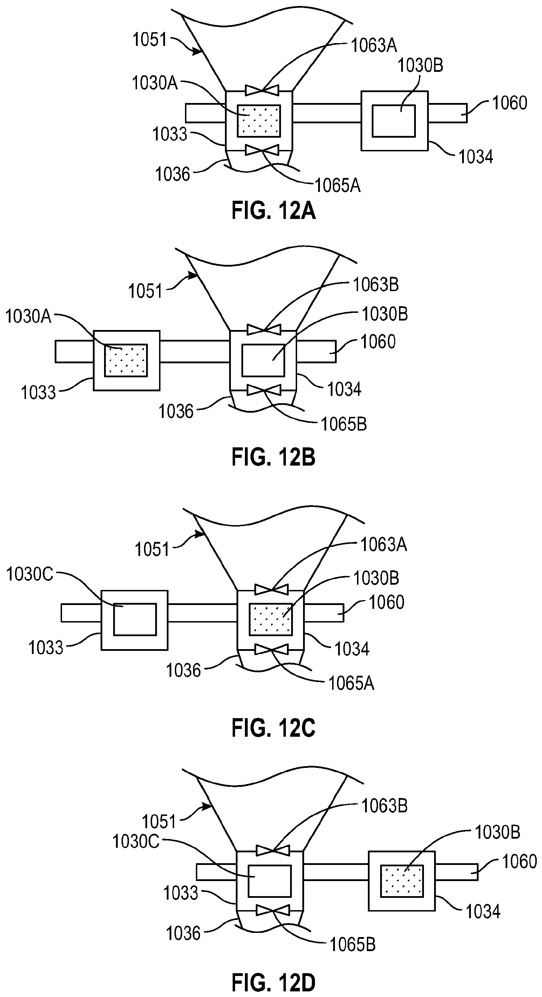

FIGS. 12A-12D provide further detail for part-switching. In FIG. 11, during deposition, the plugged ceramic honeycomb body 1030 is in the first or loading position in sealed fluid communication with the duct 1051. For part-switching, deposition zone 1031 comprises two sections: a first section 1033 and a second section 1034, which are attached to a conveying mechanism 1060. Reference to valves 1063A and 1065A indicates valves 1063 and 1065 in open positions, respectively, and to valves 1063B and 1065B indicates the same valves 1063 and 1065 in closed positions, respectively. In FIG. 12A, valves 1063A and 1065A are in open positions when deposition of agglomerates is complete and a part 1030A is loaded with agglomerates, which is housed in the first section 1033 of the deposition zone, and both the part 1030A that is loaded with agglomerates and the first section 1033 are still in the first or loading position of FIG. 12A. A second plugged honeycomb body 1030B, which is unloaded, e.g., has no agglomerates in FIG. 12A is in the second section 1034 adjacent to the first section 1033. In FIG. 12B, valves 1063B and 1065B are moved to closed positions, which unseals the duct 1051 from the first section 1033, and the part 1030A, which is loaded with agglomerates, is moved by the conveying mechanism 1060 to an offline position away from the duct 1051, at which point, the second section 1034 is moved into place, the first position, for loading part 1030B with agglomerates. In an embodiment, the deposition zone 1031 is movable such that at any time, one section holds a part while it being loaded (e.g., 1033 in FIG. 12A or 1034 in FIG. 12B) and the other section holds a part while it is waiting to be loaded (e.g., 1034 in FIG. 12A and 1033 in FIG. 12B). The conveying mechanism 1060 moves the deposition zone 1031 as a whole. For example, the first section 1033 including part 1030A, which is loaded with agglomerates, is moved into a position away from the duct 1051 and the second section 1034 including the part 1030B, which is not loaded with agglomerates, moves into the first position in fluid communication with the duct 1051 as shown in FIG. 12B. The part 1030A, which is loaded with agglomerates, is removed from the first section 1033 and relocated for post-treatment processing. Removal of the part 1030A from the first section 1033 may be conducted manually, or by automated structures such as arms or pistons to lift or push the part from the section. Thereafter, another part 1030C, which unloaded, having no agglomerates, is positioned into the first section 1033, manually or automatically, while part 1030B is being loaded with agglomerates. In FIG. 12C, valves 1063A and 1065A are moved into open positions, and part 1030B housed in second section 1034 is loaded with agglomerates while the unloaded part 1030C is held in the first section 1033. In FIG. 12D, valves 1063B and 1065B are moved to closed positions, the second part 1030B, which is now loaded with agglomerates, in the second section 1034 is moved into the position away from the duct 1051 and the third part 1030C in the first section 1033 is moved into the first position. Removal of the part 1030B from the second section 1033 may be conducted manually, or by automated structures such as arms or pistons to lift or push the part from the section. Depositing of agglomerates on part 1030C then resumes when the valves open.

Aspects of FIGS. 11-12 may be combined with an apparatus for depositing inorganic materials and forming honeycomb bodies as appropriate. For example, any of FIGS. 2-6 may be modified to include the duct 1051 having the section of non-uniform diameter 1027 diameter that substantially uniformly decreases to an outlet end 1025. Any of FIGS. 2-6 further include valves 1063 and 1065 and conveying mechanism 1060. Moreover, deposition zone 1031 may be upstream of any suitable exit zone, exit conduit, and flow driver.

## General Overview of Honeycomb Bodies

The ceramic articles herein comprise honeycomb bodies comprised of a porous ceramic honeycomb structure of porous walls having wall surfaces defining a plurality of inner channels.

In some embodiments, the porous ceramic walls comprise a material such as a filtration material which may comprise in some portions or some embodiments a porous inorganic layer disposed on one or more surfaces of the walls. In some embodiments, the filtration material comprises one or more inorganic materials, such as one or more ceramic or refractory materials. In some embodiments, the filtration material is disposed on the walls to provide enhanced filtration efficiency, both locally through and at the wall and globally through the honeycomb body, at least in the initial use of the honeycomb body as a filter following a clean state, or regenerated state, of the honeycomb body, for example such as before a substantial accumulation of ash and/or soot occurs inside the honeycomb body after extended use of the honeycomb body as a filter.

In one aspect, the filtration material is present in some portions or some embodiments as a layer disposed on the surface of one or more of the walls of the honeycomb structure. The layer in some embodiments is porous to allow the gas flow through the wall. In some embodiments, the layer is present as a continuous coating over at least part of the, or over the entire, surface of the one or more walls. In some embodiments of this aspect, the filtration material is flame-deposited filtration material.

In another aspect, the filtration material is present as a plurality of discrete regions of filtration material disposed on the surface of one or more of the walls of the honeycomb structure. The filtration material may partially block a portion of some of the pores of the porous walls, while still allowing gas flow through the wall. In some embodiments of this aspect, the filtration material is aerosol-deposited filtration material. In some preferred embodiments, the filtration material comprises a plurality of inorganic particle agglomerates, wherein the agglomerates are comprised of inorganic or ceramic or refractory material. In some embodiments, the agglomerates are porous, thereby allowing gas to flow through the agglomerates.

In some embodiments, a honeycomb body comprises a porous ceramic honeycomb body comprising a first end, a second end, and a plurality of walls having wall surfaces defining a plurality of inner channels. A deposited material such as a filtration material, which may be in some portions or some embodiments a porous inorganic layer, is disposed on one or more of the wall surfaces of the honeycomb body. The deposited material such as a filtration material, which may be a porous inorganic layer has a porosity as measured by mercury intrusion porosimetry, SEM, or X-ray tomography in a range of from about 20% to about 95%, or from about 25% to about 95%, or from about 30% to about 95%, or from about 40% to about 95%, or from about 45% to about 95%, or from about 50% to about 95%, or from about 55% to about 95%, or from about 60% to about 95%, or from about 65% to about 95%, or from about 70% to about 95%, or from about 75% to about 95%, or from about 80% to about 95%, or from about 85% to about 95%, from about 30% to about 95%, or from about 40% to about 95%, or from about 45% to about 95%, or from about 50% to about 95%, or from about 55% to about 95%, or from about 60% to about 95%, or from about 65% to about 95%, or from about 70% to about 95%, or from about 75% to about 95%, or from about 80% to about 95%, or from about 85% to about 95%, or from about 20% to about 90%, or from about 25% to about 90%, or from about 30% to about 90%, or from about 40% to about 90%, or from about 45% to about 90%, or from about 50% to about 90%, or from about 55% to about 90%, or from about 60% to about 90%, or from about 65% to about 90%, or from about 70% to about 90%, or from about 75% to about 90%, or from about 80% to about 90%, or from about 85% to about 90%, or from about 20% to about 85%, or from about 25% to about 85%, or from about 30% to about 85%, or from about 40% to about 85%, or from about 45% to about 85%, or from about 50% to about 85%, or from about 55% to about 85%, or from about 60% to about 85%, or from about 65% to about 85%, or from about 70% to about 85%, or from about 75% to about 85%, or from about 80% to about 85%, or from about 20% to about 80%, or from about 25% to about 80%, or from about 30% to about 80%, or from about 40% to about 80%, or from about 45% to about 80%, or from about 50% to about 80%, or from about 55% to about 80%, or from about 60% to about 80%, or from about 65% to about 80%, or from about 70% to about 80%, or from about 75% to about 80%, and the deposited material such as a filtration material, which may be a porous inorganic layer that has an average thickness of greater than or equal to 0.5 $\mu$m and less than or equal to 50 $\mu$m, or greater than or equal to 0.5 $\mu$m and less than or equal to 45 $\mu$m, greater than or equal to 0.5 $\mu$m and less than or equal to 40 $\mu$m, or greater than or equal to 0.5 $\mu$m and less than or equal to 35 $\mu$m, or greater than or equal to 0.5 $\mu$m and less than or equal to 30 $\mu$m, greater than or equal to 0.5 $\mu$m and less than or equal to 25 $\mu$m, or greater than or equal to 0.5 $\mu$m and less than or equal to 20 $\mu$m, or greater than or equal to 0.5 $\mu$m and less than or equal to 15 $\mu$m, greater than or equal to 0.5 $\mu$m and less than or equal to 10 $\mu$m. Various embodiments of honeycomb bodies and methods for forming such honeycomb bodies will be described herein with specific reference to the appended drawings.

The material in some embodiments comprises a filtration material, and in some embodiments comprises an inorganic filtration material. According to one or more embodiments, the inorganic filtration material provided herein comprises discrete regions and/or a discontinuous layer formed from the inlet end to the outlet end comprising discrete and disconnected patches of material or filtration material and binder comprised of primary particles in secondary particles or agglomerates that are substantially spherical. In one or more embodiments, the primary particles are non-spherical. In one or more embodiments, "substantially spherical" refers to an agglomerate having a circularity in cross section in a range of from about 0.8 to about 1 or from about 0.9 to about 1, with 1 representing a perfect circle. In one or more embodiments, 75% of the primary particles deposited on the honeycomb body have a circularity of less than 0.8. In one or more embodiments, the secondary particles or agglomerates deposited on the honeycomb body have an average circularity greater than 0.9, greater than 0.95, greater than 0.96, greater than 0.97, greater than 0.98, or greater than 0.99.

Circularity can be measured using a scanning electron microscope (SEM). The term "circularity of the cross-section (or simply circularity)" is a value expressed using the equation shown below. A circle having a circularity of 1 is a perfect circle.

$$\text{Circularity} = (4\pi \times \text{cross-sectional area})/(\text{length of circumference of the cross-section})^2.$$

A honeycomb body of one or more embodiments may comprise a honeycomb structure and deposited material such as a filtration material disposed on one or more walls of the honeycomb structure. In some embodiments, the deposited material such as a filtration material is applied to surfaces of walls present within honeycomb structure, where the walls have surfaces that define a plurality of inner channels.

The inner channels, when present, may have various cross-sectional shapes, such as circles, ovals, triangles, squares, pentagons, hexagons, or tessellated combinations or any of these, for example, and may be arranged in any suitable geometric configuration. The inner channels, when present, may be discrete or intersecting and may extend through the honeycomb body from a first end thereof to a second end thereof, which is opposite the first end.

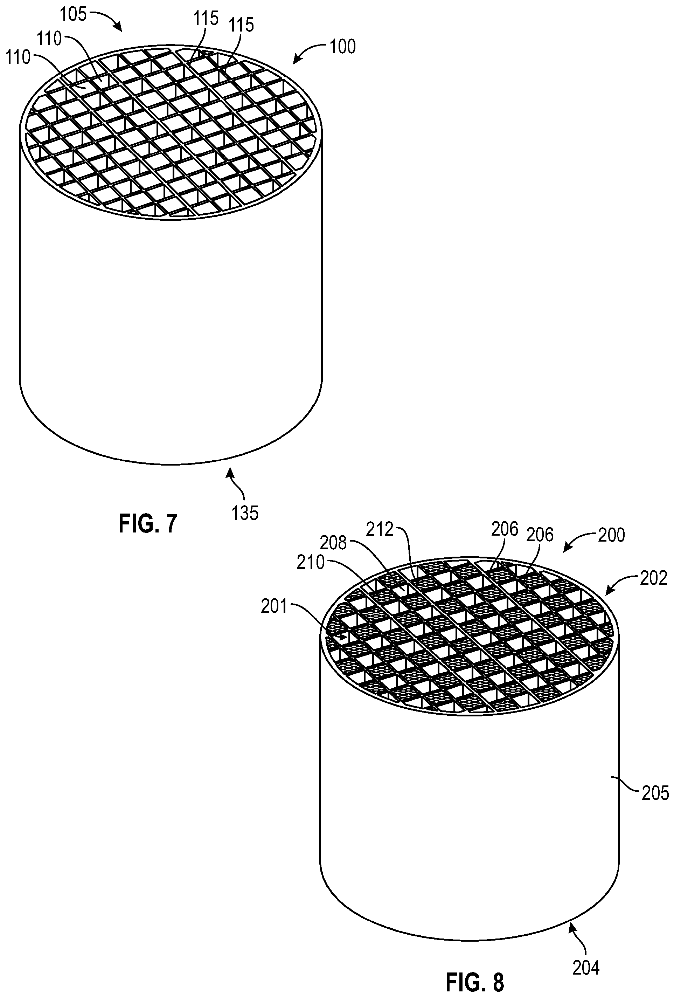

With reference now to FIG. 7, a honeycomb body 100 according to one or more embodiments shown and described herein is depicted. The honeycomb body 100 may, in embodiments, comprise a plurality of walls 115 defining a plurality of inner channels 110. The plurality of inner channels 110 and intersecting channel walls 115 extend between first end 105, which may be an inlet end, and second end 135, which may be an outlet end, of the honeycomb body. The honeycomb body may have one or more of the channels plugged on one, or both of the first end 105 and the second end 135. The pattern of plugged channels of the honeycomb body is not limited. In some embodiments, a pattern of plugged and unplugged channels at one end of the honeycomb body may be, for example, a checkerboard pattern where alternating channels of one end of the honeycomb body are plugged. In some embodiments, plugged channels at one end of the honeycomb body have corresponding unplugged channels at the other end, and unplugged channels at one end of the honeycomb body have corresponding plugged channels at the other end.

In one or more embodiments, the honeycomb body may be formed from cordierite, aluminum titanate, enstatite, mullite, forsterite, corundum (SiC), spinel, sapphirine, and periclase. In general, cordierite has a composition according to the formula $Mg_2Al_4Si_5O_{18}$. In some embodiments, the pore size of the ceramic material, the porosity of the ceramic material, and the pore size distribution of the ceramic material are controlled, for example by varying the particle sizes of the ceramic raw materials. In addition, pore formers can be included in ceramic batches used to form the honeycomb body.

In some embodiments, walls of the honeycomb body may have an average thickness from greater than or equal to 25 $\mu$m to less than or equal to 250 $\mu$m, such as from greater than or equal to 45 $\mu$m to less than or equal to 230 $\mu$m,

greater than or equal to 65 $\mu$m to less than or equal to 210 $\mu$m, greater than or equal to 65 $\mu$m to less than or equal to 190 $\mu$m, or greater than or equal to 85 $\mu$m to less than or equal to 170 $\mu$m. The walls of the honeycomb body can be described to have a base portion comprised of a bulk portion (also referred to herein as the bulk), and surface portions (also referred to herein as the surface). The surface portion of the walls extends from a surface of a wall of the honeycomb body into the wall toward the bulk portion of the honeycomb body. The surface portion may extend from 0 (zero) to a depth of about 10 $\mu$m into the base portion of the wall of the honeycomb body. In some embodiments, the surface portion may extend about 5 $\mu$m, about 7 $\mu$m, or about 9 $\mu$m (i.e., a depth of 0 (zero)) into the base portion of the wall. The bulk portion of the honeycomb body constitutes the thickness of wall minus the surface portions. Thus, the bulk portion of the honeycomb body may be determined by the following equation:

$$t_{total} - 2t_{surface}$$

where $t_{total}$ is the total thickness of the wall and $t_{surface}$ is the thickness of the wall surface.

In one or more embodiments, the bulk of the honeycomb body (prior to applying any filtration material) has a bulk mean pore size from greater than or equal to 7 $\mu$m to less than or equal to 25 $\mu$m, such as from greater than or equal to 12 $\mu$m to less than or equal to 22 $\mu$m, or from greater than or equal to 12 $\mu$m to less than or equal to 18 $\mu$m. For example, in some embodiments, the bulk of the honeycomb body may have bulk mean pore sizes of about 10 $\mu$m, about 11 $\mu$m, about 12 $\mu$m, about 13 $\mu$m, about 14 $\mu$m, about 15 $\mu$m, about 16 $\mu$m, about 17 $\mu$m, about 18 $\mu$m, about 19 $\mu$m, or about 20 $\mu$m. Generally, pore sizes of any given material exist in a statistical distribution. Thus, the term "mean pore size" or "d50" (prior to applying any filtration material) refers to a length measurement, above which the pore sizes of 50% of the pores lie and below which the pore sizes of the remaining 50% of the pores lie, based on the statistical distribution of all the pores. Pores in ceramic bodies can be manufactured by at least one of: (1) inorganic batch material particle size and size distributions; (2) furnace/heat treatment firing time and temperature schedules; (3) furnace atmosphere (e.g., low or high oxygen and/or water content), as well as; (4) pore formers, such as, for example, polymers and polymer particles, starches, wood flour, hollow inorganic particles and/or graphite/carbon particles.

In specific embodiments, the mean pore size (d50) of the bulk of the honeycomb body (prior to applying any filtration material) is in a range of from 10 $\mu$m to about 16 $\mu$m, for example 13-14 $\mu$m, and the d10 refers to a length measurement, above which the pore sizes of 90% of the pores lie and below which the pore sizes of the remaining 10% of the pores lie, based on the statistical distribution of all the pores is about 7 $\mu$m. In specific embodiments, the d90 refers to a length measurement, above which the pore sizes of 10% of the pores of the bulk of the honeycomb body (prior to applying any filtration material) lie and below which the pore sizes of the remaining 90% of the pores lie, based on the statistical distribution of all the pores is about 30 $\mu$m. In specific embodiments, the mean or average diameter (D50) of the secondary particles or agglomerates is about 2 microns. In specific embodiments, it has been determined that when the agglomerate mean size D50 and the mean wall pore size of the bulk honeycomb body d50 is such that there is a ratio of agglomerate mean size D50 to mean wall pore size of the bulk honeycomb body d50 is in a range of from 5:1 to 16:1, excellent filtration efficiency results and low pressure drop results are achieved. In more specific embodiments, a ratio of agglomerate mean size D50 to mean wall pore size of the bulk of honeycomb body d50 (prior to applying any filtration material) is in a range of from 6:1 to 16:1, 7:1 to 16:1, 8:1 to 16:1, 9:1 to 16:1, 10:1 to 16:1, 11:1 to 16:1 or 12:1 to 6:1 provide excellent filtration efficiency results and low pressure drop results.

In some embodiments, the bulk of the honeycomb body may have bulk porosities, not counting a coating, of from greater than or equal to 50% to less than or equal to 75% as measured by mercury intrusion porosimetry. Other methods for measuring porosity include scanning electron microscopy (SEM) and X-ray tomography, these two methods in particular are valuable for measuring surface porosity and bulk porosity independent from one another. In one or more embodiments, the bulk porosity of the honeycomb body may be in a range of from about 50% to about 75%, in a range of from about 50% to about 70%, in a range of from about 50% to about 65%, in a range of from about 50% to about 60%, in a range of from about 50% to about 58%, in a range of from about 50% to about 56%, or in a range of from about 50% to about 54%, for example.

In one or more embodiments, the surface portion of the honeycomb body has a surface mean pore size from greater than or equal to 7 $\mu$m to less than or equal to 20 $\mu$m, such as from greater than or equal to 8 $\mu$m to less than or equal to 15 $\mu$m, or from greater than or equal to 10 $\mu$m to less than or equal to 14 $\mu$m. For example, in some embodiments, the surface of the honeycomb body may have surface mean pore sizes of about 8 $\mu$m, about 9 $\mu$m, about 10 $\mu$m, about 11 $\mu$m, about 12 $\mu$m, about 13 $\mu$m, about 14 $\mu$m, or about 15 $\mu$m.

In some embodiments, the surface of the honeycomb body may have surface porosities, prior to application of a filtration material deposit, of from greater than or equal to 35% to less than or equal to 75% as measured by mercury intrusion porosimetry, SEM, or X-ray tomography. In one or more embodiments, the surface porosity of the honeycomb body may be less than 65%, such as less than 60%, less than 55%, less than 50%, less than 48%, less than 46%, less than 44%, less than 42%, less than 40%, less than 48%, or less than 36% for example.

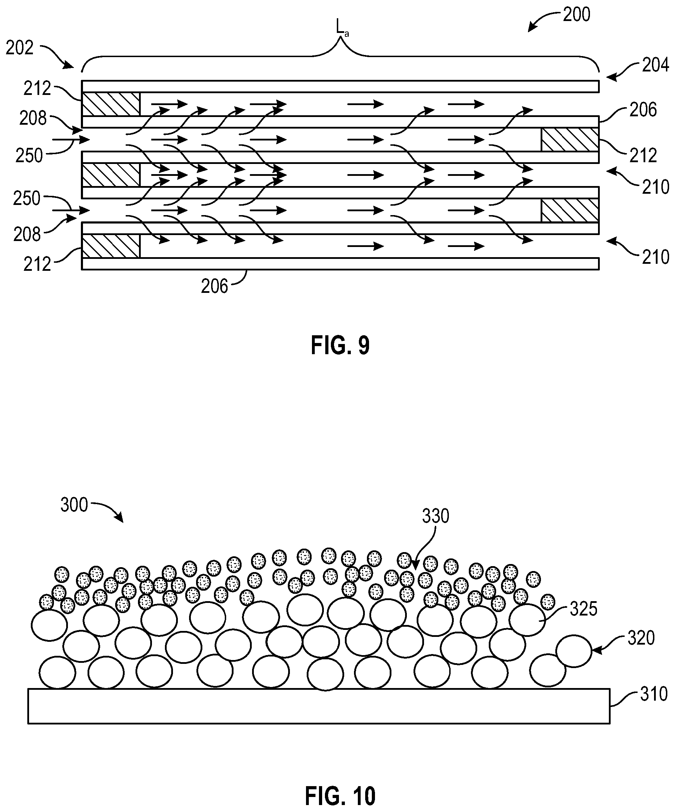

Referring now to FIGS. 8 and 9, a honeycomb body in the form of a particulate filter 200 is schematically depicted.

The particulate filter 200 may be used as a wall-flow filter to filter particulate matter from an exhaust gas stream 250, such as an exhaust gas stream emitted from a gasoline engine, in which case the particulate filter 200 is a gasoline particulate filter. The particulate filter 200 generally comprises a honeycomb body having a plurality of channels 201 or cells which extend between an inlet end 202 and an outlet end 204, defining an overall length La (shown in FIG. 9). The channels 201 of the particulate filter 200 are formed by, and at least partially defined by a plurality of intersecting channel walls 206 that extend from the inlet end 202 to the outlet end 204. The particulate filter 200 may also include a skin layer 205 surrounding the plurality of channels 201. This skin layer 205 may be extruded during the formation of the channel walls 206 or formed in later processing as an after-applied skin layer, such as by applying a skinning cement to the outer peripheral portion of the channels.

An axial cross section of the particulate filter 200 of FIG. 8 is shown in FIG. 9. In some embodiments, certain channels are designated as inlet channels 208 and certain other channels are designated as outlet channels 210. In some embodiments of the particulate filter 200, at least a first set of channels are plugged with plugs 212. Generally, the plugs 212 are arranged proximate the ends (i.e., the inlet end or the outlet end) of the channels 201. The plugs are generally arranged in a pre-defined pattern, such as in the checkerboard pattern shown in FIG. 8, with every other channel being plugged at an end. The inlet channels 208 may be plugged at or near the outlet end 204, and the outlet channels 210 may be plugged at or near the inlet end 202 on channels not corresponding to the inlet channels, as depicted in FIG. 9. Accordingly, each cell may be plugged at or near one end of the particulate filter only.

While FIG. 8 generally depicts a checkerboard plugging pattern, it should be understood that alternative plugging patterns may be used in the porous ceramic honeycomb article. In the embodiments described herein, the particulate filter 200 may be formed with a channel density of up to about 600 channels per square inch (cpsi). For example, in some embodiments, the particulate filter 100 may have a channel density in a range from about 100 cpsi to about 600 cpsi. In some other embodiments, the particulate filter 100 may have a channel density in a range from about 100 cpsi to about 400 cpsi or even from about 200 cpsi to about 300 cpsi.

In the embodiments described herein, the channel walls 206 of the particulate filter 200 may have a thickness of greater than about 4 mils (101.6 microns). For example, in some embodiments, the thickness of the channel walls 206 may be in a range from about 4 mils up to about 30 mils (762 microns). In some other embodiments, the thickness of the channel walls 206 may be in a range from about 7 mils (177.8 microns) to about 20 mils (508 microns).

In some embodiments of the particulate filter 200 described herein the channel walls 206 of the particulate filter 200 may have a bare open porosity (i.e., the porosity before any coating is applied to the honeycomb body) $\% \ P \geqq 35\%$ prior to the application of any coating to the particulate filter 200. In some embodiments the bare open porosity of the channel walls 206 may be such that $40\% \leqq \% \ P \leqq 75\%$. In other embodiments, the bare open porosity of the channel walls 206 may be such that $45\% \leqq \% \ P \leqq 75\%$, $50\% \leqq \% \ P \leqq 75\%$, $55\% \leqq \% \ P \leqq 75\%$, $60\% \leqq \% \ P \leqq 75\%$, $45\% \leqq \% \ P \leqq 70\%$, $50\% \leqq \% \ P \leqq 70\%$, $55\% \leqq \% \ P \leqq 70\%$, or $60\% \leqq \% \ P \leqq 70\%$.

Further, in some embodiments, the channel walls 206 of the particulate filter 200 are formed such that the pore distribution in the channel walls 206 has a mean pore size of $\leqq 30$ microns prior to the application of any coatings (i.e., bare). For example, in some embodiments, the mean pore size may be $\geqq 8$ microns and less than or $\leqq 30$ microns. In other embodiments, the mean pore size may be $\geqq 10$ microns and less than or $\leqq 30$ microns. In other embodiments, the mean pore size may be $\geqq 10$ microns and less than or $\leqq 25$ microns. In some embodiments, particulate filters produced with a mean pore size greater than about 30 microns have reduced filtration efficiency while with particulate filters produced with a mean pore size less than about 8 microns may be difficult to infiltrate the pores with a washcoat containing a catalyst. Accordingly, in some embodiments, it is desirable to maintain the mean pore size of the channel wall in a range of from about 8 microns to about 30 microns, for example, in a range of rom 10 microns to about 20 microns.

In one or more embodiments described herein, the honeycomb body of the particulate filter 200 is formed from a metal or ceramic material such as, for example, cordierite, silicon carbide, aluminum oxide, aluminum titanate or any other ceramic material suitable for use in elevated temperature particulate filtration applications. For example, the particulate filter 200 may be formed from cordierite by mixing a batch of ceramic precursor materials which may include constituent materials suitable for producing a ceramic article which predominately comprises a cordierite crystalline phase. In general, the constituent materials suitable for cordierite formation include a combination of inorganic components including talc, a silica-forming source, and an alumina-forming source. The batch composition may additionally comprise clay, such as, for example, kaolin clay. The cordierite precursor batch composition may also contain organic components, such as organic pore formers, which are added to the batch mixture to achieve the desired pore size distribution. For example, the batch composition may comprise a starch which is suitable for use as a pore former and/or other processing aids. Alternatively, the constituent materials may comprise one or more cordierite powders suitable for forming a sintered cordierite honeycomb structure upon firing as well as an organic pore former material.

The batch composition may additionally comprise one or more processing aids such as, for example, a binder and a liquid vehicle, such as water or a suitable solvent. The processing aids are added to the batch mixture to plasticize the batch mixture and to generally improve processing, reduce the drying time, reduce cracking upon firing, and/or aid in producing the desired properties in the honeycomb body. For example, the binder can include an organic binder. Suitable organic binders include water soluble cellulose ether binders such as methylcellulose, hydroxypropyl methylcellulose, methylcellulose derivatives, hydroxyethyl acrylate, polyvinyl alcohol, and/or any combinations thereof. Incorporation of the organic binder into the plasticized batch composition allows the plasticized batch composition to be readily extruded. In some embodiments, the batch composition may include one or more optional forming or processing aids such as, for example, a lubricant which assists in the extrusion of the plasticized batch mixture. Exemplary lubricants can include tall oil, sodium stearate or other suitable lubricants.

After the batch of ceramic precursor materials is mixed with the appropriate processing aids, the batch of ceramic precursor materials is extruded and dried to form a green honeycomb body comprising an inlet end and an outlet end with a plurality of channel walls extending between the inlet end and the outlet end. Thereafter, the green honeycomb body is fired according to a firing schedule suitable for producing a fired honeycomb body. At least a first set of the channels of the fired honeycomb body are then plugged in a predefined plugging pattern with a ceramic plugging composition and the fired honeycomb body is again fired to ceram the plugs and secure the plugs in the channels.

In various embodiments the honeycomb body is configured to filter particulate matter from a gas stream, for example, an exhaust gas stream from a gasoline engine. Accordingly, the mean pore size, porosity, geometry and other design aspects of both the bulk and the surface of the honeycomb body are selected taking into account these filtration requirements of the honeycomb body. As an example, and as shown in the embodiment of FIG. 10, a wall 310 of the honeycomb body 300, which can be in the form of the particulate filter as shown in FIGS. 8 and 9, has filtration material deposits 320 disposed thereon, which in some embodiments is sintered or otherwise bonded by heat treatment. The filtration material deposits 320 comprise particles 325 that are deposited on the wall 310 of the honeycomb body 300 and help prevent particulate matter from exiting the honeycomb body along with the gas stream 330, such as, for example, soot and/or ash, and to help prevent the particulate matter from clogging the base portion of the walls 310 of the honeycomb body 300. In this way, and according to embodiments, the filtration material deposits 320 can serve as the primary filtration component while the base portion of the honeycomb body can be configured to otherwise minimize pressure drop for example as compared to honeycomb bodies without such filtration material deposits. The filtration material deposits are delivered by the aerosol deposition methods disclosed herein.

As mentioned above, the material, which in some portions or some embodiments may be an inorganic layer, on walls of the honeycomb body is very thin compared to thickness of the base portion of the walls of the honeycomb body. As will be discussed in further detail below, the material, which may be an inorganic layer, on the honeycomb body can be formed by methods that permit the deposited material to be applied to surfaces of walls of the honeycomb body in very thin applications or in some portions, layers. In embodiments, the average thickness of the material, which may be deposit regions or an inorganic layer, on the base portion of the walls of the honeycomb body is greater than or equal to 0.5 $\mu$m and less than or equal to 50 $\mu$m, or greater than or equal to 0.5 $\mu$m and less than or equal to 45 $\mu$m, greater than or equal to 0.5 $\mu$m and less than or equal to 40 $\mu$m, or greater than or equal to 0.5 $\mu$m and less than or equal to 35 $\mu$m, or greater than or equal to 0.5 $\mu$m and less than or equal to 30 $\mu$m, greater than or equal to 0.5 $\mu$m and less than or equal to 25 $\mu$m, or greater than or equal to 0.5 $\mu$m and less than or equal to 20 $\mu$m, or greater than or equal to 0.5 $\mu$m and less than or equal to 15 $\mu$m, greater than or equal to 0.5 $\mu$m and less than or equal to 10 $\mu$m.

As discussed above, the deposited material, which may in some portions or some embodiments be an inorganic layer, can be applied to the walls of the honeycomb body by methods that permit the inorganic material, which may be an inorganic layer, to have a small mean pore size. This small mean pore size allows the material, which may be an inorganic layer, to filter a high percentage of particulate and prevents particulate from penetrating honeycomb and settling into the pores of the honeycomb. The small mean pore size of material, which may be an inorganic layer, according to embodiments increases the filtration efficiency of the honeycomb body. In one or more embodiments, the material, which may be an inorganic layer, on the walls of the honeycomb body has a mean pore size from greater than or equal to 0.1 $\mu$m to less than or equal to 5 $\mu$m, such as from greater than or equal to 0.5 $\mu$m to less than or equal to 4 $\mu$m, or from greater than or equal to 0.6 $\mu$m to less than or equal to 3 $\mu$m. For example, in some embodiments, the material, which may be an inorganic layer, on the walls of the honeycomb body may have mean pore sizes of about 0.5 $\mu$m, about 0.6 $\mu$m, about 0.7 $\mu$m, about 0.8 $\mu$m, about 0.9 $\mu$m, about 1 $\mu$m, about 2 $\mu$m, about 3 $\mu$m, or about 4 $\mu$m.

Although the deposited material, which may be an inorganic layer, on the walls of the honeycomb body may, in some embodiments, cover substantially 100% of the wall surfaces defining inner channels of the honeycomb body, in other embodiments, the material, which may be an inorganic layer, on the walls of the honeycomb body covers less than substantially 100% of the wall surfaces defining inner channels of the honeycomb body. For instance, in one or more embodiments, the deposited material, which may be an inorganic layer, on the walls of the honeycomb body covers at least 70% of the wall surfaces defining inner channels of the honeycomb body, covers at least 75% of the wall surfaces defining inner channels of the honeycomb body, covers at least 80% of the wall surfaces defining inner channels of the honeycomb body, covers at least 85% of the wall surfaces defining inner channels of the honeycomb body, covers at least 90% of the wall surfaces defining inner channels of the honeycomb body, or covers at least 85% of the wall surfaces defining inner channels of the honeycomb body.

As described above with reference to FIGS. 9 and 9, the honeycomb body can have a first end and second end.

The first end and the second end are separated by an axial length. In some embodiments, the filtration material deposits on the walls of the honeycomb body may extend the entire axial length of the honeycomb body (*i.e.,* extends along 100% of the axial length). However, in other embodiments, the material, which may be an inorganic layer, on the walls of the honeycomb body extends along at least 60% of the axial length, such as extends along at least 65% of the axial length, extends along at least 70% of the axial length, extends along at least 75% of the axial length, extends along at least 80% of the axial length, extends along at least 85% of the axial length, extends along at least 90% of the axial length, or extends along at least 95% of the axial length.

In embodiments, the material, which may in some portions or some embodiments be an inorganic layer, on the walls of the honeycomb body extends from the first end of the honeycomb body to the second end of the honeycomb body. In some embodiments, the material, which may be an inorganic layer, on the walls of the honeycomb body extends the entire distance from the first surface of the honeycomb body to the second surface of the honeycomb body (*i.e.,* extends along 100% of a distance from the first surface of the honeycomb body to the second surface of the honeycomb body). However, in one or more embodiments, the layer or material, which may be an inorganic layer, on the walls of the honeycomb body extends along 60% of a distance between the first surface of the honeycomb body and the second surface of the honeycomb body, such as extends along 65% of a distance between the first surface of the honeycomb body and the second surface of the honeycomb body, extends along 70% of a distance between the first surface of the honeycomb body and the second surface of the honeycomb body, extends along 75% of a distance between the first surface of the honeycomb body and the second surface of the honeycomb body, extends along 80% of a distance between the first surface of the honeycomb body and the second surface of the honeycomb body, extends along 85% of a distance between the first surface of the honeycomb body and the second surface of the honeycomb body, extends along 90% of a distance between the first surface of the honeycomb body and the second surface of the honeycomb body, or extends along 95% of a distance between the first surface of the honeycomb body and the second surface of the honeycomb body.

The selection of a honeycomb body having a low pressure drop in combination with the low thickness and porosity of the filtration material on the honeycomb body according to embodiments allows a honeycomb body of embodiments to have a low initial pressure drop when compared to other honeycomb bodies. In embodiments, the filtration material is between 0.3 to 30 g/L on the honeycomb body, such as between 1 to 30 g/L on the honeycomb body, or between 3 to 30 g/L on the honeycomb body. In other embodiments, the filtration material is between 1 to 20 g/L on the honeycomb body, such as between 1 to 10 g/L on the honeycomb body. In some embodiments, the increase in pressure drop across the honeycomb due to the application of the filtration material is less than 20% of the uncoated honeycomb. In other embodiments that increase can be less than or equal to 9%, or less than or equal to 8%. In other embodiments, the pressure drop increase across the honeycomb body is less than or equal to 7%, such as less than or equal to 6%. In still other embodiments, the pressure drop increase across the honeycomb body is less than or equal to 5%, such as less than or equal to 4%, or less than or equal to 3%.

Without being bound to any particular theory, it is believed that small pore sizes in the filtration material deposits on the walls of the honeycomb body allow the honeycomb body to have good filtration efficiency even before ash or soot build-up occurs in the honeycomb body. The filtration efficiency of honeycomb bodies is measured herein using the protocol outlined in Tandon et al., 65 CHEMICAL ENGINEERING SCIENCE 4751-60 (2010). As used herein, the initial filtration efficiency of a honeycomb body refers to a new or regenerated honeycomb body that does not comprise any measurable soot or ash loading. In embodiments, the initial filtration efficiency (*i.e.,* clean filtration efficiency) of the honeycomb body is greater than or equal to 70%, such as greater than or equal to 80%, or greater than or equal to 85%. In yet other embodiments, the initial filtration efficiency of the honeycomb body is greater than 90%, such as greater than or equal to 93%, or greater than or equal to 95%, or greater than or equal to 98%.

The material, which is preferably an inorganic filtration material, on the walls of the honeycomb body according to embodiments is thin and has a porosity, and in some embodiments preferably also has good chemical durability and physical stability. The chemical durability and physical stability of the filtration material deposits on the honeycomb body can be determined, in embodiments, by subjecting the honeycomb body to test cycles comprising burn out cycles and an aging test and measuring the initial filtration efficiency before and after the test cycles. For instance, one exemplary method for measuring the chemical durability and the physical stability of the honeycomb body comprises measuring the initial filtration efficiency of a honeycomb body; loading soot onto the honeycomb body under simulated operating conditions; burning out the built up soot at about 650 °C; subjecting the honeycomb body to an aging test at 1050 °C and 10% humidity for 12 hours; and measuring the filtration efficiency of the honeycomb body. Multiple soot build up and burnout cycles may be conducted. A small change in filtration efficiency (ΔFE) from before the test cycles to after the test cycles indicates better chemical durability and physical stability of the filtration material deposits on the honeycomb body. In some embodiments, the ΔFE is less than or equal to 5%, such as less than or equal to 4%, or less than or equal to 3%. In other embodiments, the ΔFE is less than or equal to 2%, or less than or equal to 1%.

In some embodiments, the filtration material deposits on the walls of the honeycomb body may be comprised of one or a mixture of ceramic components, such as, for example, ceramic components selected from the group consisting of $SiO_2$, $Al_2O_3$, $MgO$, $ZrO_2$, $CaO$, $TiO_2$, $CeO_2$, $Na_2O$, Pt, Pd, Ag, Cu, Fe, Ni, and mixtures thereof. Thus, the filtration material deposits on the walls of the honeycomb body may comprise an oxide ceramic. As discussed in more detail below, the method for forming the filtration material deposits on the honeycomb body according to embodiments can allow for customization of the filtration material composition for a given application. This may be beneficial because the ceramic components may be combined to match, for example, the physical properties-such as, for example coefficient of thermal expansion (CTE) and Young's modulus, etc.-of the honeycomb body, which can improve the physical stability of the honeycomb body. In some embodiments, the filtration material deposits on the walls of the honeycomb body may comprise cordierite, aluminum titanate, enstatite, mullite, forsterite, corundum (SiC), spinel, sapphirine, and periclase.

In some embodiments, the composition of the filtration material deposits on the walls of the honeycomb body is the same as the composition of the honeycomb body. However, in other embodiments, the composition of the filtration material is different from the composition of the walls of the matrix of the honeycomb body.

The properties of the filtration material deposits and, in turn, the honeycomb body overall are attributable to the ability of applying a sparse or thin porous filtration material having small median pore sizes relative to the host honeycomb body.

In some embodiments, the method of forming a honeycomb body comprises forming or obtaining a mixture or a suspension that comprises a ceramic precursor material and a solvent. The ceramic precursor material of the filtration material precursor comprises ceramic materials that serve as a source of, for example, $SiO_2$, $Al_2O_3$, $TiO_2$, $MgO$, $ZrO_2$, $CaO$, $CeO_2$, $Na_2O$, Pt, Pd, Ag, Cu, Fe, Ni, and the like.

The suspension is atomized with an atomizing gas to form liquid-particulate-binder droplets comprised of the liquid vehicle, the binder material, and the particles, is directed to a honeycomb body, Agglomerates formed upon removal or evaporation of the liquid vehicle are then deposited on the honeycomb body. The honeycomb body may have one or more of the channels plugged on one end, such as, for example, the first end of the honeycomb body during the deposition of the aerosol to the honeycomb body. The plugged channels may, in some embodiments, be removed after deposition of the aerosol. But, in other embodiments, the channels may remain plugged even after deposition of the aerosol. The pattern of plugging channels of the honeycomb body is not limited, and in some embodiments all the channels of the honeycomb body may be plugged at one end. In other embodiments, only a portion of the channels of the honeycomb body may be plugged at one end. In such embodiments, the pattern of plugged and unplugged channels at one end of the honeycomb body is not limited and may be, for example, a checkerboard pattern where alternating channels of one end of the honeycomb body are plugged. By plugging all or a portion of the channels at one end of the honeycomb body during deposition of the aerosol, the aerosol may be evenly distributed within the channels of the honeycomb body.

According to one or more embodiments, binders with high temperature (e.g., greater than 400°C) resistance are preferably included in the agglomerates and filtration material deposits to enhance integrity of the agglomerates and deposits even at high temperatures encountered in exhaust gas emissions treatment systems. In specific embodiments, a filtration material can comprise about 5 to 25 wt% Dowsil™ US-CF-2405, an alkoxy-siloxane resin. The microstructure of the filtration material deposits was similar to the as-deposited morphology after the various tests described below. The inorganic binders Aremco Ceramabind™ 644A and 830 could also be used in in one or more embodiments. The filtration efficiency of both samples were higher than 60% after the high flow blowing test, a high flow test at 850 $Nm^3$/h. The tests demonstrated that the binders, including organic and inorganic binders, caused the primary particles to bind together to form secondary particles (also called agglomerates), which were bound to the filter walls, even when exposed to high temperatures encountered in engine exhaust gas streams. According to one or more embodiments, other inorganic and organic binders such as silicate (e.g. $Na_2SiO_3$), phosphate (e.g. $AlPO_4$, $AlH_2(PO_4)_3$), hydraulic cement(e.g. calcium aluminate), sol (e.g. $mSiO_2 \cdot nH_2O$, $Al(OH)_x \cdot (H_2O)_{6-x}$) and metal alkoxides, could also be utilized, for example to increase mechanical strength by an appropriate curing process.

## EXAMPLES

Embodiments will be further understood by the following non-limiting examples.

**Raw Materials.** Unless specified otherwise in the examples, the following raw materials were used. The inorganic material being deposited was alumina, the liquid vehicle was ethanol, the atomizing gas was nitrogen, and a binder was present. The carrier gas was either air or nitrogen.

**Raw Material Utilization.** Raw material utilization was determined by determining the weight gain of the honeycomb and comparing that to a calculated amount of ceramic put into the process. For example, if the weight gain was equal to the amount of ceramic put into the process, then the utilization was calculated as 100%; or if the weight gain were only one half of the of ceramic put into the process, the utilization was calculated to be 50%.

**Smoke Filtration Efficiency.** Filtration efficiency of wall-flow filters was analyzed as follows. Filtration efficiency is determined by measuring the difference between a number of soot particles that are introduced into the particulate filter and a number of soot particles that exit the particulate filter before and after exposure to a flow condition. The soot particles were particles from cigarette smoke having a median particle size of 300 nm in a stream of air with a soot particle concentration of 500,000 particles/$cm^3$ that was flowed through the wall-flow filter at a flow rate of 51 $Nm^3$/h, room

temperature, and a velocity of 1.7 m/s for one minute. Filtration efficiency was determined by measuring particle count using an 0.1 CFM Lighthouse Handheld 3016 particle counter available from Lighthouse Worldwide Solutions.

EXAMPLE 1

The effect of moving from T-style chamber to a round, co-flow chamber on material utilization was analyzed. The wall flow filter had the following characteristics: diameter of 4.055 inches (10.3 cm), length of 5.47 inches (13.9 cm), cells per square inch (CPSI) of 200, wall thickness of 8 mils (203 microns), and average pore size of 14 $\mu$m.

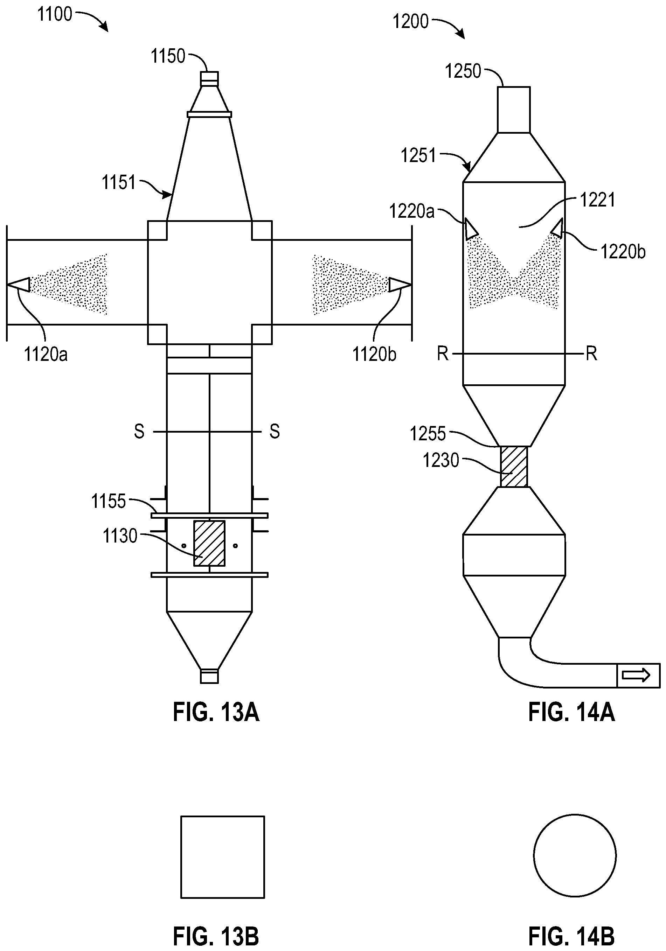

A representative schematic of an apparatus including a T-style chamber 1100 is shown in FIG. 13A having a duct 1151 spanning from a first end 1150 to a second end 1155, defining a T-style chamber of the duct that was in fluid communication with spray nozzles 1120a, 1120b and a wall-flow particulate filter 1130, for example, a gasoline particulate filter (GPF). As shown in FIG. 13B, which is taken along line S-S of FIG. 13A, the cross-section of the T-Style chamber was square. There was a flat panel entry of fluid flow at the second end of the duct 1155 into the plugged ceramic honeycomb body 1130. Flow in the flat panel and corner areas may be subject to recirculation and to deposition of particles and/or agglomerates onto chamber walls rather than into the wall-flow filter. The spray nozzles 1120a, 1120b were configured opposite to each other in a "T" section of the chamber, which in such a configuration spray at one another promoting particle collision. A carrier gas entered the apparatus of FIG. 13 nominally from the first end 1150.

A representative schematic of an apparatus including a round, co-flow chamber 1200 is shown in FIG. 14A and FIG. 14B having a duct 1251 spanning from a first end 1250 to a second end 1255, defining a round, co-flow chamber of the duct that was in fluid communication with nozzles 1220a, 1220b located in area 1221 and a plugged ceramic honeycomb body 1230, for example, a wall-flow particulate filter, for example, a gasoline particulate filter (GPF). The converging nozzles were positioned to be in co-flow with a carrier gas supplied nominally from the first end 1250. As shown in FIG. 14B, which is taken along line R-R of FIG. 14A, the cross-section of the round, co-flow chamber was round.

Various flow rates through the apparatus according to the T-style chamber of FIGS. 13A-13B and the apparatus according to co-flow, round chamber FIGS. 14A-14B were tested at constant mixture composition for the same type of wall-flow particular filter, the parameters for which are as follows:

| parameter | co-flow, round chamber | | | T- chamber | | |
|---|---|---|---|---|---|---|
| solids% (alumina) | 11% | | | | | |
| binder (vs. alumina) | 5% | | | | | |
| spraving nozzle | internal mixing nozzle SU11 | | | | | |
| liquid flow rate | 17~21 g/min | | | | | |
| atomizing gas flow rate | 5.3 Nm$^3$/h | | | | | |
| carrier gas flow rate (Nm$^3$/h) | 21.5 | 40 | 60 | 21.5 | 40 | 75 |
| heat transmitter (°C) | 220 | 220 | none | none | none | none |
| heater 1(°C) | 120 | 120 | 350 | 350 | 350 | 350 |
| heater 2(°C) | 120 | 120 | 200 | 350 | 350 | 350 |
| heater 3(°C) | 120 | 120 | 150 | 120 | 120 | 200 |

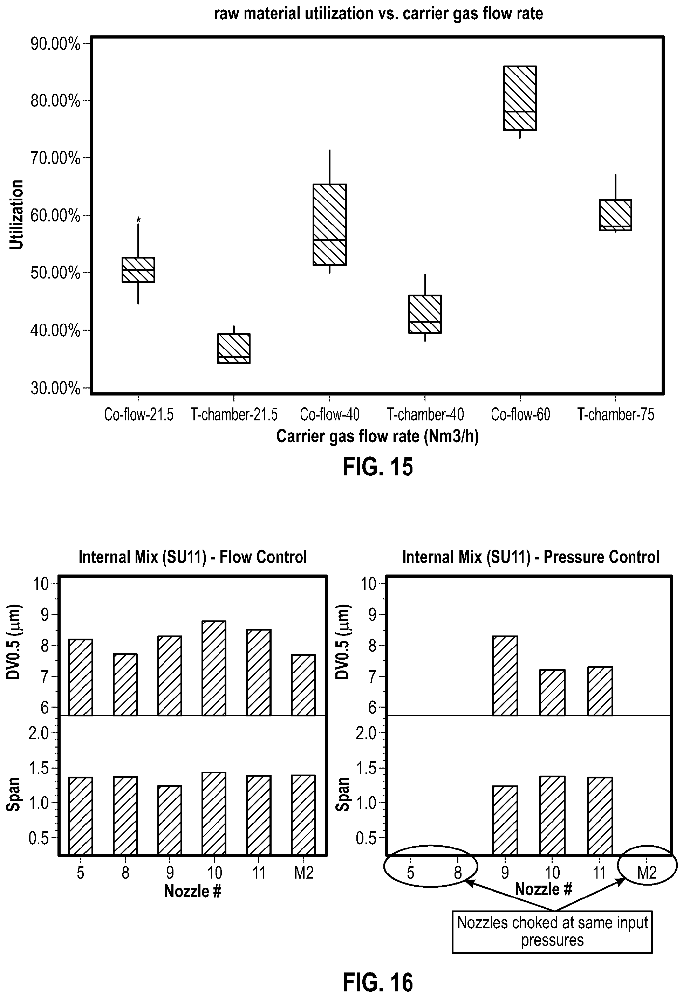

Table 1 and FIG. 15 provide a summary of the data.

**Table 1.**

| Type of Chamber | Flow Rate (Nm$^3$/h) | Raw Material Utilization (%) |
|---|---|---|
| T-Chamber | 21.5 | 38.39% |
| | | 35.39% |
| | | 34.22% |
| | | 40.57% |
| | | 34.27% |

(continued)

| Type of Chamber | Flow Rate (Nm³/h) | Raw Material Utilization (%) |
|---|---|---|
| | 40 | 42.31% |
| | | 41.51% |
| | | 40.30% |
| | | 49.69% |
| | | 38.38% |
| | 75 | 57.38% |
| | | 58.18% |
| | | 58.04% |
| | | 67.20% |
| | | 57.10% |
| Co-flow, round Chamber | 21.5 | 46.05% |
| | | 50.48% |
| | | 48.25% |
| | | 51.85% |
| | | 52.17% |
| | | 58.74% |
| | | 52.64% |
| | | 59.31% |
| | | 48.36% |
| | | 44.41% |
| | | 50.14% |
| | 40 | 63.43% |
| | | 49.81% |
| | | 52.79% |
| | | 51.88% |
| | | 58.61% |
| | | 71.29% |
| | 60 | 85.90% |
| | | 78.08% |
| | | 74.09% |
| | | 75.30% |
| | | 86.20% |

FIG. 15 is a graph of raw material utilization (%) versus carrier gas flow rates (Nm³/h) for various flow rates. The T-Chamber was tested at flow rates of 21.5 Nm³/h, 40 Nm³/h, and 75 Nm³/h; and the co-flow, round chamber was tested at flow rates of 21.5 Nm³/h, 40 Nm³/h, and 60 Nm³/h. Using the co-flow, round chamber and converging nozzles contributed to a 15-20% improvement in material utilization over the T-Style chamber and spray nozzles. Without intending to be bound by theory, it is thought that modifications of co-flow, round chamber and converging nozzles promote better particle and/or agglomerate convection along fluid streamlines so that the particles and/or agglomerates have a higher probability of making it into the wall-flow filter as compared to the square chamber and spray nozzles of the T-style chamber.

EXAMPLE 2

Influence of operating nozzles in flow control versus pressure control was analyzed by mounting different nozzles on using a test bench equipped with a particle size analyzer (laser diffraction-based). Nozzles tested were internal mix nozzles (SU11 from Spraying Systems Co.). Span and D50 (microns) of agglomerates from various nozzles were analyzed using flow control versus pressure control under constant mixture composition. Flow control was achieved by use of a mass flow meter, which was a coriolis-type meter. Pressure control was achieved by setting pressure of mixture and carrier gas supplies using pressure regulators.

Table 2 and FIG. 16 provide a summary of span and D50 (microns) of resulting particles including agglomerates for the nozzles tested. Span is a unitless measure of the width of the particle size distribution, which is (D90-D10)/D50.

**Table 2.**

| Type of Control | Nozzle # | Span | D50 (microns) |
|---|---|---|---|
| Flow Control | 5 | 1.366 | 8.2 |
| | 8 | 1.377 | 7.7 |
| | 9 | 1.241 | 8.3 |
| | 10 | 1.443 | 8.8 |
| | 11 | 1.388 | 8.5 |
| | M2 | 1.390 | 7.7 |
| Pressure Control | 5 | 0 | 0 |
| | 8 | 0 | 0 |
| | 9 | 1.241 | 8.3 |
| | 10 | 1.375 | 7.2 |
| | 11 | 1.356 | 7.3 |
| | M2 | 0 | 0 |

As shown in Table 2 and FIG. 16, at the same pressure set points (nozzles 5, 8, and M2) some internal nozzles choked and did not flow the mixture. Without intending to be bound by theory, it is thought that internal geometry tolerance issues of the nozzles prevent them from being effective at the pressure set points. When the same nozzles were operated under constant flow rate conditions, they could operate effectively. In conclusion, using flow control, no choking occurred for any of the nozzles and repeatable spray operation was achieved.

EXAMPLE 3

Influence of nozzle type, internal mix versus external mix was analyzed. The wall flow filter had the following characteristics: diameter of 4.055 inches (10.3 cm), length of 5.47 inches (13.9 cm), cells per square inch (CPSI) of 200, wall thickness of 8 mils (203 microns), and average pore size of 14 $\mu$m. The internal nozzle tested was a Spraying Systems model 67147 air cap with a 2050 fluid cap. The 67147 air cap has an ID of the exit of 0.047" The external nozzle tested was a Spraying Systems model 64 air cap with a 1250 fluid cap. The air cap 64 has a 0.064" ID. The 2050 fluid caps have a 0.020" ID hole, and has an OD of 0.050". Filtration efficiency was analyzed versus pressure drop, loading, and time for a mixture composition by weight of: 11% $Al_2O_3$, 15% binder, 0.5-3% dispersants, and the balance being liquid vehicle and the conditions of Table 3 and a T-style chamber in accordance with FIGS. 13A-13B.

**Table 3.**

| Condition | Internal Mix Nozzle | External Mix Nozzle |
|---|---|---|
| Carrier Gas Flow Nm$^3$/hr | 21.5 | 21.5 |
| Atomizing Gas Flow Nm$^3$/hr | 5.4 | 5 |
| Mixture Flow g/min | 19 | 8.7 |
| dP @ 75% FE Pa | 201 | 203 |
| Loading @ 75% FE g/L | 5.8 | 4.4 |
| Time @ 75% FE Seconds | 515 | 390 |

Table 4 provides a summary of the data.

**Table 4.**

| Type of Nozzle | Example # | Smoke Filtration Efficiency (FE) % | dP at 1.7m/s [Pa] | Loading [g/L] | Deposition Time [sec] |
|---|---|---|---|---|---|
| Internal Mix | 3.1 I | 53.30% | 182 | 3.13 | 266 |
| | 3.2 I | 65.55% | 189 | 4.57 | 400 |
| | 3.3 I | 74.30% | 202 | 5.55 | 480 |
| | 3.4 I | 79.36% | 205 | 6.55 | 580 |
| External Mix | 3.5 E | 74.86% | 203 | 4.23 | 400 |
| | 3.6 E | 77.70% | 210 | 5.29 | 500 |
| | 3.7 E | 71.70% | 192 | 3.5 | 300 |
| | 3.8 E | 66.60% | 186 | 2.8 | 200 |
| | 3.9 E | 87.90% | 223 | 7.29 | 600 |

As shown in Table 4, use of external mix nozzles for versus internal mix nozzles improved loading time and loading amount with no negative impact to FE/dP performance. External mix nozzles can reduce the amount of material needed to load a part and therefore the cycle time to hit the desired filtration efficiency target as compared to internal mix nozzles.

EXAMPLE 4

Influence of number of nozzles was analyzed. Filtration efficiency was analyzed versus pressure drop, loading, and time for constant mixture composition for the same type of wall-flow particular filter a co-flow chamber in accordance with FIGS. 14A-14B. The wall flow filter had the following characteristics: diameter 4.055 inches (10.3 cm), Length of 5.47 inches (13.9 cm), cells per square inch (CPSI) of 200, wall thickness of 8 mils (203 microns), and average pore size of 14 $\mu$m. Table 5 provides a summary of the data where the same process was run for individual nozzles as compared to double- or triple- nozzles simultaneously.

**Table 5.**

| # of Nozzles | Example # | Nozzle | Smoke Filtration Efficiency (FE) % | dP at 1.7 m/s [Pa] | Loading [g/L] | Deposition Time [sec] |
|---|---|---|---|---|---|---|
| Double Nozzle | 4.1 | Double | 77.1% | 200 | 3.63 | 132 |
| | 4.2 | Double | 82.0% | 204 | 3.81 | 132 |
| | 4.3 | Double | 81.2% | 205 | 3.80 | 132 |
| | 4.A | Single 1# | 83.0% | 209 | 3.58 | 265 |
| | 4.B | Single 1# | 84.3% | 208 | 3.74 | 265 |
| | 4.C | Single 2# | 82.6% | 210 | 3.70 | 265 |
| | 4.D | Single 2# | 79.5% | 204 | 3.76 | 265 |
| Triple Nozzle | 4.4 | Triple | 73.1% | 200 | 3.32 | 90 |
| | 4.5 | Triple | 74.3% | 205 | 3.55 | 90 |
| | 4.6 | Triple | 76.1% | 205 | 3.52 | 90 |
| | 4.E | Single 1# | 84.6% | 211 | 3.69 | 265 |
| | 4.F | Single 1# | 84.6% | 211 | 3.80 | 265 |
| | 4.G | Single 2# | 82.0% | 209 | 3.86 | 265 |
| | 4.H | Single 2# | 85.0% | 214 | 3.91 | 265 |
| | 4.I | Single 3# | 82.4% | 208 | 3.96 | 265 |
| | 4.J | Single 3# | 82.8% | 204 | 3.92 | 265 |

Using a double nozzle configuration in the apparatus increased particle concentration and improved total depositing time to hit a target FE. As compared to a single nozzle setup, the double nozzle configuration reduced cycle time by half to hit approximately the same FE target (minus 2%). For the double-nozzles, a reduction of the coating time target ($t_c$) by half does not quite achieve the original FE value obtained by running individual nozzles for $t_c$ time. The loss in FE was about 3%.

Using a triple nozzle configuration in the apparatus increased particle concentration and improved total coating time to hit a target FE. The triple nozzle configuration was able to reduce the cycle time by 2/3. There was a little loss in filtration efficiency due to particle agglomeration in the triple nozzle configuration. For the triple-nozzles, a reduction of the coating time target ($t_c$) by 2/3 does not achieve the original FE value obtained by running individual nozzles for $t_c$ time. The loss in FE was about 7%.

**Claims**

1. A method for applying a surface treatment to a plugged honeycomb body (100, 200, 300, 1130) comprising porous walls (115, 310), the method comprising:

   directing a liquid-particulate-binder stream comprising a liquid vehicle, a binder material, and inorganic material particles into an atomizing nozzle (520, 620, 720, 820, 920),
   directing an atomizing gas (515, 615, 715, 815, 915) into the atomizing nozzle (520, 620, 720, 820, 920), the atomizing nozzle (520, 620, 720, 820, 920) aerosolizing the liquid-particulate-binder stream into droplets comprising the liquid vehicle, the binder material, and the inorganic material particles;
   conveying the droplets toward the plugged honeycomb body (100, 200, 300, 1130) with a gaseous carrier stream through a duct (551, 651, 751, 851, 915, 1051) comprising an outlet end proximate the plugged honeycomb body (100, 200, 300, 1130), the gaseous carrier stream comprising a carrier gas and the atomizing gas (515, 615, 715, 815, 915), the carrier gas delivered to a chamber of the duct (551, 651, 751, 851, 915, 1051) in an annular co-flow around the liquid-particulate-binder droplets at an end of the atomizing nozzle (520, 620, 720, 820, 920);
   evaporating substantially all the liquid vehicle from the droplets to form agglomerates comprising the inorganic material particles and the binder material; and
   depositing the agglomerates on, or in, or both on and in, the porous walls (115, 310).

2. The method of claim 1, further comprising cooling the atomizing nozzle (520, 620, 720, 820, 920) during the aerosolizing.

3. The method of claim 1 or claim 2, further comprising maintaining a temperature of the atomizing nozzle (520, 620, 720, 820, 920) below a boiling point of the liquid vehicle.

4. The method of any one of claims 1 to 3, further comprising heating the carrier gas to a temperature in a range from greater than or equal to 50°C to less than or equal to 500°C.

5. The method of any one of claims 1 to 4, wherein the porous walls (115, 310) form a plurality of inlet channels (208), the inlet channels (208) plugged at a distal end (204) of the honeycomb body (200), a plurality of outlet channels (210), the outlet channels plugged at a proximal end (202) of the honeycomb body (100), and the agglomerates are deposited on, or in, or both on and in the porous walls (115, 310) of the inlet channels (208) but not the outlet channels (210).

6. The method of any one of claims 1 to 5, wherein the duct (551, 651, 751, 851, 915, 1051) is in sealed fluid communication with the plugged honeycomb body (100, 200, 300, 1130) during the depositing.

7. The method of any one of claims 1 to 6, wherein a total volumetric flow through the duct (551, 651, 751, 851, 915, 1051) is greater than or equal to 5 Nm$^3$/hour and/or less than or equal to 200 Nm$^3$/hour.

8. The method of any one of claims 1 to 7, further comprising aerosolizing a plurality of liquid-particulate-binder streams with a plurality of atomizing nozzles (820a, 820b, 820c).

9. The method of claim 8, wherein each atomizing nozzle (820a, 820b, 820c) of the plurality of atomizing nozzles is angled toward a center of the duct (551, 651, 751, 851, 915, 1051).

10. The method of any one of claims 1 to 9, wherein the depositing the agglomerates onto the porous walls (115, 310) comprises filtering the agglomerates from the gaseous carrier stream with the porous walls (115, 310).

11. The method of any one of claims 1 to 10, further comprising heating the deposited agglomerates to burn off or volatilize an organic component of the binder material from the deposited agglomerates.

12. The method of any one of claims 1 to 10, further comprising heating the deposited agglomerates to physically bond an inorganic component of the binder material in the deposited agglomerates with the porous walls (115, 310) of the honeycomb body (100, 200, 300, 1130).

13. The method of claim 12, wherein the heating the deposited agglomerates causes the inorganic component of the binder material in the deposited agglomerates to form a porous inorganic structure on the porous walls (115, 310).

14. The method of any one of claims 1 to 13, wherein the liquid vehicle comprises methoxyethanol, ethanol, xylene, methanol, ethylacetate, benzene, or mixtures thereof.

15. The method of any one of claims 1 to 14, wherein an average size of the droplets is greater than or equal to 1 $\mu$m and less than or equal to 15 $\mu$m.


**Patentansprüche**

1. Verfahren zum Anwenden einer Oberflächenbehandlung auf einen verstopften Wabenkörper (100, 200, 300, 1130), der poröse Wände (115, 310) umfasst, wobei das Verfahren Folgendes umfasst:

Leiten eines Flüssigkeit-Partikel-Bindemittel-Stroms, der ein flüssiges Vehikel, ein Bindemittelmaterial und anorganische Materialpartikel umfasst, in eine Zerstäubungsdüse (520, 620, 720, 820, 920),
Leiten eines Zerstäubungsgases (515, 615, 715, 815, 915) in die Zerstäubungsdüse (520, 620, 720, 820, 920), wobei die Zerstäubungsdüse (520, 620, 720, 820, 920) den Flüssigkeit-Partikel-Bindemittel-Strom zu Tröpfchen aerosolisiert, die das flüssige Vehikel, das Bindemittelmaterial und die anorganischen Materialpartikel umfassen;
Fördern der Tröpfchen zu dem verstopften Wabenkörper (100, 200, 300, 1130) mit einem gasförmigen Trägerstrom durch einen Kanal (551, 651, 751, 851, 915, 1051), der ein Auslassende nahe dem verstopften Wabenkörper (100, 200, 300, 1130) umfasst, wobei der gasförmige Trägerstrom ein Trägergas und das Zerstäubungsgas (515, 615, 715, 815, 915) umfasst, wobei das Trägergas einer Kammer des Kanals (551, 651, 751, 851, 915, 1051) in einem ringförmigen Co-Fluss um die Flüssigkeit-Partikel-Bindemittel-Tröpfchen an einem Ende der Zerstäubungsdüse (520, 620, 720, 820, 920) zugeführt wird;
Verdampfen von im Wesentlichen dem gesamten flüssigen Vehikel aus den Tröpfchen, um Agglomerate zu bilden, welche die Partikel des anorganischen Materials und das Bindemittelmaterial umfassen; und
Abscheiden der Agglomerate an oder in oder sowohl an als auch in den porösen Wänden (115, 310).

2. Verfahren nach Anspruch 1, ferner umfassend Kühlen der Zerstäubungsdüse (520, 620, 720, 820, 920) während des Aerosolisierens.

3. Verfahren nach Anspruch 1 oder Anspruch 2, ferner umfassend Halten einer Temperatur der Zerstäubungsdüse (520, 620, 720, 820, 920) unter einem Siedepunkt des flüssigen Vehikels.

4. Verfahren nach einem der Ansprüche 1 bis 3, ferner umfassend Erhitzen des Trägergases auf eine Temperatur in einer Spanne von größer als oder gleich 50 °C bis weniger als oder gleich 500 °C.

5. Verfahren nach einem der Ansprüche 1 bis 4, wobei die porösen Wände (115, 310) eine Vielzahl von Einlasskanälen (208), wobei die Einlasskanäle (208) an einem distalen Ende (204) des Wabenkörpers (200) verstopft sind, eine Vielzahl von Auslasskanälen (210), wobei die Auslasskanäle an einem proximalen Ende (202) des Wabenkörpers (100) verstopft sind, bilden, und die Agglomerate an oder in oder sowohl an als auch in den porösen Wänden (115, 310) der Einlasskanäle (208), aber nicht der Auslasskanäle (210) abgeschieden sind.

6. Verfahren nach einem der Ansprüche 1 bis 5, wobei der Kanal (551, 651, 751, 851, 915, 1051) in abgedichteter Fluidkommunikation mit dem verstopften Wabenkörper (100, 200, 300, 1130) während des Abscheidens ist.

7. Verfahren nach einem der Ansprüche 1 bis 6, wobei ein Gesamtvolumenfluss durch den Kanal (551, 651, 751, 851, 915, 1051) größer als oder gleich 5 Nm$^3$/Stunde und/oder weniger als oder gleich 200 Nm$^3$/Stunde ist.

8. Verfahren nach einem der Ansprüche 1 bis 7, ferner umfassend Aerosolisieren einer Vielzahl von Flüssigkeit-Partikel-Bindemittel-Strömen mit einer Vielzahl von Zerstäubungsdüsen (820a, 820b, 820c).

9. Verfahren nach Anspruch 8, wobei jede Zerstäubungsdüse (820a, 820b, 820c) aus der Vielzahl von Zerstäubungsdüsen zu einer Mitte des Kanals (551, 651, 751, 851, 915, 1051) abgewinkelt ist.

10. Verfahren nach einem der Ansprüche 1 bis 9, wobei das Abscheiden der Agglomerate auf den porösen Wänden (115, 310) Filtern der Agglomerate aus dem gasförmigen Trägerstrom mit den porösen Wänden (115, 310) umfasst.

11. Verfahren nach einem der Ansprüche 1 bis 10, ferner umfassend Erhitzen der abgeschiedenen Agglomerate, um eine organische Komponente des Bindemittelmaterials von den abgeschiedenen Agglomeraten abzubrennen oder zu verflüchtigen.

12. Verfahren nach einem der Ansprüche 1 bis 10, ferner umfassend Erhitzen der abgeschiedenen Agglomerate, um eine anorganische Komponente des Bindemittelmaterials in den abgeschiedenen Agglomeraten physisch an die porösen Wände (115, 310) des Wabenkörpers (100, 200, 300, 1130) zu binden.

13. Verfahren nach Anspruch 12, wobei das Erhitzen der abgeschiedenen Agglomerate bewirkt, dass die anorganische Komponente des Bindemittelmaterials in den abgeschiedenen Agglomeraten eine poröse anorganische Struktur an den porösen Wänden (115, 310) bildet.

14. Verfahren nach einem der Ansprüche 1 bis 13, wobei das flüssige Vehikel Methoxyethanol, Ethanol, Xylol, Methanol, Ethylacetat, Benzol oder Mischungen davon umfasst.

15. Verfahren nach einem der Ansprüche 1 bis 14, wobei eine durchschnittliche Größe der Tröpfchen größer als oder gleich 1 $\mu$m und weniger als oder gleich 15 $\mu$m ist.

## Revendications

1. Procédé d'application d'un traitement de surface à un corps en nid d'abeilles bouché (100, 200, 300, 1130) comprenant des parois poreuses (115, 310), le procédé comprenant :

   la direction d'un flux de liquide-particule-liant comprenant un véhicule liquide, un matériau liant et des particules de matériau inorganique dans une buse de pulvérisation (520, 620, 720, 820, 920),
   la direction d'un gaz de pulvérisation (515, 615, 715, 815, 915) dans la buse de pulvérisation (520, 620, 720, 820, 920), la buse de pulvérisation (520, 620, 720, 820, 920) aérosolisant le flux de liquide-particule-liant en gouttelettes comprenant le véhicule liquide, le matériau liant et les particules de matériau inorganique ;
   le transport des gouttelettes vers le corps en nid d'abeilles bouché (100, 200, 300, 1130) avec un flux de support gazeux à travers un conduit (551, 651, 751, 851, 915, 1051) comprenant une extrémité de sortie à proximité du corps en nid d'abeilles bouché (100, 200, 300, 1130), le flux de support gazeux comprenant un gaz de support et le gaz de pulvérisation (515, 615, 715, 815, 915), le gaz de support distribué à une chambre du conduit (551, 651, 751, 851, 915, 1051) dans un co-flux annulaire autour des gouttelettes de liquide-particule-liant à une extrémité de la buse de pulvérisation (520, 620, 720, 820, 920) ;
   l'évaporation de sensiblement tout le véhicule liquide à partir des gouttelettes pour former des agglomérats comprenant les particules de matériau inorganique et le matériau liant ; et
   le dépôt des agglomérats sur les parois poreuses (115, 310), ou dans celles-ci, ou à la fois sur et dans celles-ci.

2. Procédé de la revendication 1, comprenant en outre le refroidissement de la buse de pulvérisation (520, 620, 720, 820, 920) pendant l'aérosolisation.

3. Procédé de la revendication 1 ou de la revendication 2, comprenant en outre le maintien d'une température de la buse de pulvérisation (520, 620, 720, 820, 920) en dessous d'un point d'ébullition du véhicule liquide.

4. Procédé de l'une quelconque des revendications 1 à 3, comprenant en outre la chauffe du gaz porteur à une température dans une plage allant d'une température supérieure ou égale à 50 °C à une température inférieure ou égale à 500 °C.

5. Procédé de l'une quelconque des revendications 1 à 4, dans lequel les parois poreuses (115, 310) forment une pluralité de canaux d'entrée (208), les canaux d'entrée (208) étant bouchés au niveau d'une extrémité distale (204) du corps en nid d'abeilles (200), une pluralité de canaux de sortie (210), les canaux de sortie étant bouchés au niveau d'une extrémité proximale (202) du corps en nid d'abeilles (100), et les agglomérats sont déposés sur les parois poreuses (115, 310) des canaux d'entrée (208), ou dans celles-ci, ou à la fois sur et dans celles-ci, mais pas celles des canaux de sortie (210).

6. Procédé de l'une quelconque des revendications 1 à 5, dans lequel le conduit (551, 651, 751, 851, 915, 1051) est en communication fluidique étanche avec le corps en nid d'abeilles bouché (100, 200, 300, 1130) pendant le dépôt.

7. Procédé de l'une quelconque des revendications 1 à 6, dans lequel un débit volumétrique total à travers le conduit (551, 651, 751, 851, 915, 1051) est supérieur ou égal à 5 Nm$^3$/heure et/ou inférieur ou égal à 200 Nm$^3$/heure.

8. Procédé de l'une quelconque des revendications 1 à 7, comprenant en outre l'aérosolisation d'une pluralité de flux de liquide-particule-liant avec une pluralité de buses de pulvérisation (820a, 820b, 820c).

9. Procédé de la revendication 8, dans lequel chaque buse de pulvérisation (820a, 820b, 820c) de la pluralité de buses de pulvérisation est inclinée vers un centre du conduit (551, 651, 751, 851, 915, 1051).

10. Procédé de l'une quelconque des revendications 1 à 9, dans lequel le dépôt des agglomérats sur les parois poreuses (115, 310) comprend la filtration des agglomérats à partir du flux de support gazeux avec les parois poreuses (115, 310).

11. Procédé de l'une quelconque des revendications 1 à 10, comprenant en outre la chauffe des agglomérats déposés pour brûler ou volatiliser un composant organique du matériau liant à partir des agglomérats déposés.

12. Procédé de l'une quelconque des revendications 1 à 10, comprenant en outre la chauffe des agglomérats déposés pour lier physiquement un composant inorganique du matériau liant dans les agglomérats déposés aux parois poreuses (115, 310) du corps en nid d'abeilles (100, 200, 300, 1130).

13. Procédé de la revendication 12, dans lequel la chauffe des agglomérats déposés amène le composant inorganique du matériau liant dans les agglomérats déposés à former une structure inorganique poreuse sur les parois poreuses (115, 310).

14. Procédé de l'une quelconque des revendications 1 à 13, dans lequel le véhicule liquide comprend du méthoxyéthanol, de l'éthanol, du xylène, du méthanol, de l'acétate d'éthyle, du benzène ou des mélanges de ceux-ci.

15. Procédé de l'une quelconque des revendications 1 à 14, dans lequel une taille moyenne des gouttelettes est supérieure ou égale à 1 μm et inférieure ou égale à 15 μm.

400

405
Mixture Preparation

410
Atomizing to form droplets

415
Intermixing droplets and gaseous carrier stream

420
Evaporation to form agglomerates

425
Material Deposition

430
Post-Treatment

FIG. 1

**FIG. 2**

**FIG. 3**

**FIG. 4**

**FIG. 5**

**FIG. 6**

FIG. 7

FIG. 8

**FIG. 9**

**FIG. 10**

FIG. 11

1051
1063A
1030A
1030B
1033
1060
1036
1034
1065A

**FIG. 12A**

1051
1063B
1030A
1030B
1060
1033
1034
1036
1065B

**FIG. 12B**

1051
1063A
1030C
1030B
1060
1033
1034
1036
1065A

**FIG. 12C**

1051
1063B
1030C
1030B
1060
1033
1034
1036
1065B

**FIG. 12D**

1100

1150

1151

1120a          1120b

S          S

1155

1130

**FIG. 13A**

1200

1250

1251

1220a          1221

1220b

R          R

1255

1230

**FIG. 14A**

**FIG. 13B**

**FIG. 14B**

### raw material utilization vs. carrier gas flow rate

**FIG. 15**

**FIG. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2158956 A1
- EP 1775021 A1
- EP 1775022 A1
- US 2010126133 A1
- US 20142276 A1

**Non-patent literature cited in the description**

- **TANDON et al.** *CHEMICAL ENGINEERING SCIENCE*, 2010, vol. 65, 4751-60